# EUROPEAN PATENT SPECIFICATION

(11) **EP 1 973 960 B1**
(45) Date of publication and mention of the grant of the patent: **02.03.2011**
(21) Application number: 06849244.6
(22) Date of filing: 21.12.2006
(51) Int. Cl.: C08G 63/16, C08L 67/02, C08G 63/78

(54) **POLYESTER OLIGOMERS, METHODS OF MAKING, AND THERMOSETTING COMPOSITIONS FORMED THEREFROM**
POLYESTEROLIGOMERE, HERSTELLUNGSVERFAHREN UND DARAUS GEBILDETE HITZEHÄRTBARE ZUSAMMENSETZUNGEN
OLIGOMERES DE POLYESTER, PROCEDES DE FABRICATION, ET COMPOSITIONS THERMODURCISSABLES A BASE DE CES OLIGOMERES DE POLYESTER

(30) Priority: 04.01.2006 US 326208
(43) Date of publication of application: 01.10.2008
(73) Proprietor: SABIC Innovative Plastics IP B.V., 4612 PX Bergen op Zoom (NL)
(72) Inventor: BERTI, Corrado, 48022 Lugo (RA) (IT); BINASSI, Enrico, Castenaso (BO) (IT); BRUNELLE, Daniel Joseph, Burnt Hills, NY 12027 (US); COLONNA, Martino, 40122 Bologna (IT); FIORINI, Maurizio, 40011 Anzola Emilia (BO) (IT); ZUCCHERI, Tommaso, 40124 Bologna (IT)
(74) Representative: Modiano, Micaela Nadia
(86) International application number: PCT/US2006/049021
(87) International publication number: WO 2007/081539

(56) References cited:
- US-A- 3 972 852
- US-A- 5 777 046
- US-A1- 2005 075 456

## Description

### BACKGROUND OF THE INVENTION

This disclosure relates to stabilized thermosetting compositions, methods of manufacture, and articles and uses thereof.

Polymeric and oligomeric materials having good resistance to photoyellowing, also referred to as weatherability, are desirable materials for use in preparing articles that must withstand conditions of prolonged exposure to light, heat, moisture, and/or a combination of at least one of these conditions. Useful materials include low molecular weight polyarylates having both weatherable characteristics and functionality for incorporating into useful compositions, and which may be used to form a composition that is stable and permanent upon crosslinking. Polymeric and oligomeric materials meeting these requirements can desirably have hydrolytically stable functional groups that can allow for cross-reactivity, but which are not so reactive that the groups would lead to premature reaction when used in a crosslinkable composition. The functional groups may be present as side chain groups, grafts, main chain functional groups, or end groups. Typically, suitable end groups may include, for example, hydroxyl, phenolic, and/or carboxylate end groups.

Carboxylic acid-derived end groups are particularly desirable for use as cross-linkable sites in polyarylate polymeric or oligomeric materials, and can have a balance of the desired stability and reactive properties. However, methods of preparing polyarylates using standard solution polymerization use highly reactive starting materials such as acid chlorides or anhydrides that can lead to low reaction controllability, and high by-product levels through side reactions such as hydrolysis. Purification to remove such by-products may be needed, which may in turn lead to high material costs, low conversion to product, extensive workup processes, and low yields.

There accordingly remains a need in the art for a method of preparing polymers and/or oligomers having desirable properties and end group functionality, which provide these materials cleanly and in high yield.

### SUMMARY OF THE INVENTION

The above deficiencies in the art are alleviated by, in an embodiment, a method of preparing a carboxylic acid end-capped oligomer comprising melt reacting a dicarboxylic acid, a dihydroxy compound, a hydroxy end-capped soft block compound, a diaryl carbonate, and a catalyst, wherein the molar ratio of dihydroxy end-capped soft block compound to dihydroxy compound is 1:4 to 1:40, the molar ratio of dicarboxylic acid to the combined molar amounts of dihydroxy compound and hydroxy end-capped soft block compound is 1.01:1 to 2:1, and the molar ratio of diaryl carbonate to the combined molar amounts of dihydroxy compound and hydroxy end-capped soft block compound is 1.5:1 to 3:1.

In another embodiment, a carboxylic acid end-capped oligomer comprises the melt reaction product of a dicarboxylic acid, a dihydroxy compound, a hydroxy end-capped soft block compound, a diaryl carbonate, and a catalyst, wherein the molar ratio of hydroxy end-capped soft block compound to dihydroxy compound is 1:4 to 1:40, the molar ratio of dicarboxylic acid to the combined molar amounts of dihydroxy compound and hydroxy end-capped soft block compound is 1.01:1 to 2:1; and the molar ratio of diaryl carbonate to the combined molar amounts of dihydroxy compound and hydroxy end-capped soft block compound is 1.5:1 to 3:1.

In another embodiment, a carboxylic acid end-capped oligomer having carboxylic acid end groups comprises the melt reaction product of a polyarylate ester unit derived from a dicarboxylic acid and dihydroxy compound, a soft block derived from a hydroxy end-capped soft block compound, a diaryl carbonate, and a catalyst; wherein the molar ratio of hydroxy end-capped soft block compound to dihydroxy compound is 1:4 to 1:40, the molar ratio of dicarboxylic acid to the combined molar amounts of dihydroxy compound and hydroxy end-capped soft block compound is 1.01:1 to 2:1, and the molar ratio of diaryl carbonate to the combined molar amounts of dihydroxy compound and hydroxy end-capped soft block compound is 1.5:1 to 3:1; and wherein at least one end of the soft block is linked to a polyarylate ester unit, and wherein greater than or equal to 60 mole percent of the total number of all end groups are carboxylic acid end groups, and wherein the carboxylic acid end-capped oligomer is free of amine compounds.

In another embodiment, a carboxylic acid end-capped oligomer has the formula: 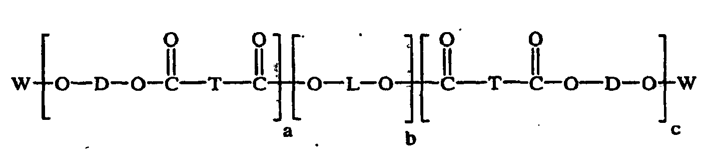 wherein each T is independently an arylene group, each D is independently an arylene group, L is a soft block, each W is independently H or a dicarboxylic acid residue having a free carboxylic acid, a and c are each independently 0 to 20, with the proviso that the sum of a+c is 4 to 40, and b is 1 to 3; wherein greater than or equal to 60 mole percent of the total number of end groups in the carboxylic acid end-capped oligomer are carboxylic acid end groups, and wherein the carboxylic acid end-capped oligomer is free of amine compounds.

In another embodiment, a thermosetting composition comprising the carboxylic acid end-capped oligomer is disclosed. In another embodiment, an article comprising the thermosetting composition is disclosed.

We turn now to the figures, which are meant to be exemplary and not limiting.

### BRIEF DESCRIPTION OF THE FIGURES

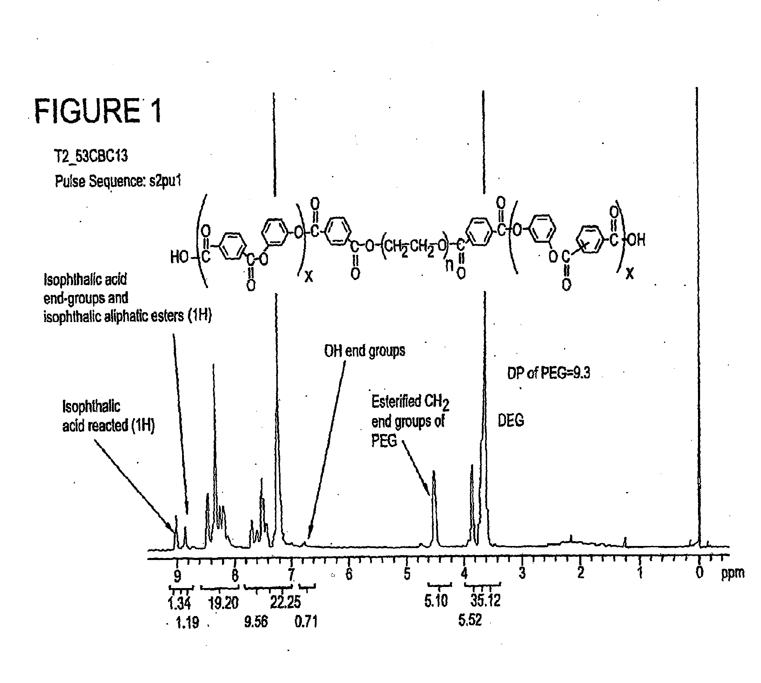

Figure 1 is a ¹H nuclear magnetic resonance (NMR) spectrum of the carboxylic acid end-capped oligomer.

The above described and other features are exemplified by the following detailed description.

### DETAILED DESCRIPTION OF THE INVENTION

Surprisingly, it has been found that a carboxylic acid end-capped oligomer comprising a polyarylate and a soft block may be prepared by melt reacting a dicarboxylic acid, dihydroxy compound, hydroxy end-capped soft block compound, and diaryl carbonate, in the presence of a catalyst, to form a carboxylic acid end-capped oligomer wherein the molar percentage of carboxylic acid end groups is greater than or equal to 60 mol% of the total number of moles of end groups present in the carboxylic acid end-capped oligomer. Advantageously, the polyarylate-soft block oligomer having carboxylic acid end groups so prepared has a glass transition temperature that is sufficiently low such that a thermosetting composition prepared therefrom may be crosslinked using a low temperature (less than 150°C) curing process. In a further advantage, the process for preparing the carboxylic acid end-capped oligomer is a "one-pot" process wherein the product may be used directly and without any added purification. Thermosetting materials prepared using the carboxylic acid end-capped oligomers have desirable properties including hardness, chemical stability, solvent resistance, transparency and desirable mechanical properties, in addition to excellent weatherability.

As used herein, the term "alkyl" refers to a straight or branched chain monovalent hydrocarbon group; "alkylene" refers to a straight or branched chain divalent hydrocarbon group; "alkylidene" refers to a straight or branched chain divalent hydrocarbon group, with both valences on a single common carbon atom; "alkenyl" refers to a straight or branched chain monovalent hydrocarbon group having at least two carbons joined by a carbon-carbon double bond; "cycloalkyl" refers to a non-aromatic monovalent monocyclic or multicyclic hydrocarbon group having at least three carbon atoms, "cycloalkylene" refers to a non-aromatic alicyclic divalent hydrocarbon group having at least three carbon atoms, with at least one degree of unsaturation; "aryl" refers to an aromatic monovalent group containing only carbon in the aromatic ring or rings; "arylene" refers to an aromatic divalent group containing only carbon in the aromatic ring or rings; "alkylaryl" refers to an aryl group that has been substituted with an alkyl group as defined above, with 4-methylphenyl being an exemplary alkylaryl group; "arylalkyl" refers to an alkyl group that has been substituted with an aryl group as defined above, with benzyl being an exemplary arylalkyl group; "acyl" refers to a an alkyl group as defined above with the indicated number of carbon atoms attached through a carbonyl carbon bridge (-C(=O)-); "alkoxy" refers to an alkyl group as defined above with the indicated number of carbon atoms attached through an oxygen bridge (-O-); and "aryloxy" refers to an aryl group as defined above with the indicated number of carbon atoms attached through an oxygen bridge (-O-).

Unless otherwise indicated, each of the foregoing groups may be unsubstituted or substituted, provided that the substitution does not significantly adversely affect synthesis, stability, or use of the compound. The term "substituted" as used herein means that any one or more hydrogens on the designated atom or group is replaced with another group, provided that the designated atom's normal valence is not exceeded. When the substituent is oxo (i.e., =O), then two hydrogens on the atom are replaced. Combinations of substituents and/or variables are permissible provided that the substitutions do not significantly adversely affect synthesis or use of the compound.

The carboxylic acid end-capped oligomer disclosed herein comprises a polyester repeating unit of formula (1): 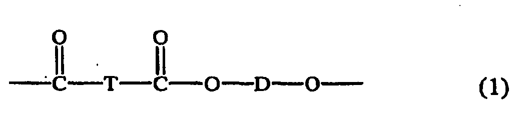 wherein T is a divalent group derived from a dicarboxylic acid, and may be, for example, a C₂₋₁₀ alkylene group, a C₆₋₂₀ cycloalkylene group, a C₆₋₂₀ alkylaryl group, or a C₆₋₃₀ arylene group. Of these, specifically useful groups are C₆₋₂₀ arylene groups. Also in formula (1), D is a divalent group derived from a dihydroxy compound, and may be, for example, a C₂₋₁₀ alkylene group, a C₆₋₂₀ cycloalkylene group, a C₆₋₃₀ arylene group, a C₆₋₃₀ alkylene-arylene group, or a polyoxyalkylene group in which the alkylene moiety contain 2 to 6 carbon atoms, specifically 2, 3, or 4 carbon atoms. Specifically useful groups useful herein include C₆₋₃₀ arylene groups and C₆₋₃₀ alkylene-arylene groups.

Examples of dicarboxylic acids that may be used to prepare the polyesters include isophthalic and/or terephthalic acid, 1,2-di(p-carboxyphenyl)ethane, 4,4'-dicarboxydiphenyl ether, 4,4'-bisbenzoic acid, cis- and/or trans-1,4-cylohexanedicarboxylic acid, and mixtures comprising at least one of the foregoing acids. Acids containing fused rings can also be present, such as in 1,4-, 1,5-, or 2,6-naphthalenedicarboxylic acids. Specific dicarboxylic acids are terephthalic acid, isophthalic acid, naphthalene dicarboxylic acid, cyclohexane dicarboxylic acid, or mixtures thereof. A specifically useful dicarboxylic acid comprises a mixture of isophthalic acid and terephthalic acid wherein the molar ratio of isophthalic acid to terephthalic acid is 99:1 to 1:99, specifically 85:15 to 15:95, more specifically 80:20 to 20:80, and still more specifically 70:30 to 30:70.

In an embodiment, D is a C₂₋₆ alkylene radical. In another embodiment, D is a C₂₋₆ alkylene radical and T is p-phenylene, m-phenylene, naphthalene, a divalent cycloalkylene group, or a mixture thereof. In another embodiment, D is derived from a dihydroxy aromatic compound of formula (2): 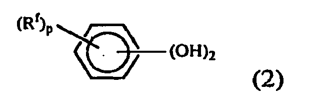 wherein each R^{f} is independently a halogen atom, a C₁₋₁₀ hydrocarbon group, or a C_{1- 10} halogen substituted hydrocarbon group, and p is 0 to 4. The halogen is usually bromine. Examples of compounds that may be represented by the formula (2) include resorcinol, substituted resorcinol compounds such as 5-methyl resorcinol, 5-ethyl resorcinol, 5-propyl resorcinol, 5-butyl resorcinol, 5-t-butyl resorcinol, 5-phenyl resorcinol, 5-cumyl resorcinol, 2,4,5,6-tetrafluoro resorcinol, 2,4,5,6-tetrabromo resorcinol, or the like; catechol; hydroquinone; substituted hydroquinones such as 2-methyl hydroquinone, 2-ethyl hydroquinone, 2-propyl hydroquinone, 2-butyl hydroquinone, 2-t-butyl hydroquinone, 2-phenyl hydroquinone, 2-cumyl. hydroquinone, 2,3,5,6-tetramethyl hydroquinone, 2,3,5,6-tetra-t-butyl hydroquinone, 2,3,5,6-tetrafluoro hydroquinone, 2,3,5,6-tetrabromo hydroquinone, or the like; or combinations comprising at least one of the foregoing compounds. In an embodiment, a specifically useful aromatic dihydroxy compound is resorcinol.

In another embodiment, each D is a group of the formula (3):

-A¹-Y¹-A²- (3)

wherein each of A¹ and A² is a monocyclic divalent aryl radical and Y¹ is a bridging radical having one or two atoms that separate A¹ from A². In an exemplary embodiment, one atom separates A¹ from A². Illustrative non-limiting examples of radicals of this type are -O-, -S-, -S(O)-, -S(O₂)-, -C(O)-, methylene, cyclohexylmethylene, 2-[2.2.1]-bicycloheptylidene, ethylidene, isopropylidene, neopentylidene, cyclohexylidene, cyclopentadecylidene, cyclododecylidene, and adamantylidene. The bridging radical Y¹ may be a hydrocarbon group or a saturated hydrocarbon group such as methylene, cyclohexylidene, or isopropylidene. In another embodiment, Y¹ is a carbon-carbon bond (-) connecting A¹ and A².

Polyesters may be produced by the condensation reaction of dihydroxy compounds having the formula HO-R¹-OH, which includes dihydroxy aromatic compounds of formula (4):

HO-A¹-Y¹-A²-OH (4)

wherein Y¹, A¹ and A² are as described above. Also included are bisphenol compounds of general formula (5): 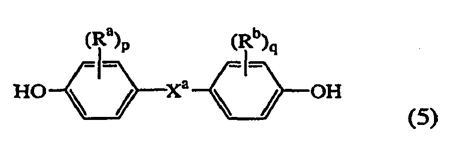 wherein R⁸ and R⁶ each represent a halogen atom or a monovalent hydrocarbon group and may be the same or different; p and q are each independently integers of 0 to 4; and X^{a} represents one of the groups of formula (6): 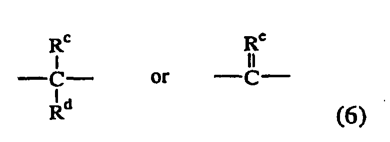 wherein R^{c} and R^{d} each independently represent a hydrogen atom or a monovalent linear alkyl or cyclic alkylene group and R^{c} is a divalent hydrocarbon group. In an embodiment, R^{c} and R^{d} represent a cyclic alkylene group; or a heteroatom-containing cyclic alkylene group comprising carbon atoms and heteroatoms with a valency of two or greater. In an embodiment, a heteroatom-containing cyclic alkylene group comprises at least one heteroatom with a valency of 2 or greater, and at least two carbon atoms. Suitable heteroatoms for use in the heteroatom-containing cyclic alkylene group include -O-, -S-, and -N(Z)-, where Z is a substituent group selected from hydrogen, hydroxy, C₁₋₁₂ alkyl, C₁₋₁₂ alkoxy, or C₁₋₁₂ acyl. Where present, the cyclic alkylene group or heteroatom-containing cyclic alkylene group may have 3 to 20 atoms, and may be a single saturated or unsaturated ring, or fused polycyclic ring system wherein the fused rings are saturated, unsaturated, or aromatic.

Specific examples of the types of bisphenol compounds represented by formula (5) include 1,1-bis(4-hydroxyphenyl) methane, 1,1-bis(4-hydroxyphenyl) ethane, 2,2-bis(4-hydroxyphenyl) propane (hereinafter "bisphenol A" or "BPA"), 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-1-methylphenyl) propane, 1,1-bis(4-hydroxy-t-butylphenyl) propane, 3,3-bis(4-hydroxyphenyl)phthalimidine, 2-phenyl-3,3-bis(4-hydroxyphenyl)phthalimidine (PPPBP), and 1,1-bis(4-hydroxy-3-methylphenyl)cyclohexane (DMBPC). Combinations comprising at least one of the foregoing dihydroxy compounds may also be used.

Other illustrative, non-limiting examples of suitable dihydroxy compounds include the following: 4,4'-dihydroxybiphenyl, 1,6-dihydroxynaphthalene, 2,6-dihydroxynaphthalene, bis(4-hydroxyphenyl)diphenylmethane, bis(4-hydroxyphenyl)-1-naphthylmethane, 1,2-bis(4-hydroxyphenyl)ethane, 1,1-bis(4-hydroxyphenyl)-1-phenylethane, 2,2-bis(4-hydroxycyclohexyl) propane (hydrogenated bisphenol-A), 2-(4-hydroxyphenyl)-2-(3-hydroxyphenyl)propane, bis(4-hydroxyphenyl)phenylmethane, 2,2-bis(4-hydroxy-3-bromophenyl)propane, 1,1-bis (hydroxyphenyl)cyclopentane, 1,1-bis(4-hydroxyphenyl)cyclohexane, 1,1-bis(4-hydroxy-3 methyl phenyl)cyclohexane 1,1-bis(4-hydroxyphenyl)isobutene, 1,1-bis(4-hydroxyphenyl)cyclododecane, trans-2,3-bis(4-hydroxyphenyl)-2-butene, 2,2-bis(4-hydroxyphenyl)adamantine, (alpha, alpha'-bis(4-hydroxyphenyl)toluene, bis(4-hydroxyphenyl)acetonitrile, 2,2-bis(3-methyl-4-hydroxyphenyl)propane, 2,2-bis(3-ethyl-4-hydroxyphenyl)propane, 2,2-bis(3-n-propyl-4-hydroxyphenyl)propane, 2.2-bis(3-isopropyl-4-hydroxyphenyl)propane, 2,2-bis(3-sec-butyl-4-hydroxyphenyl)propane, 2,2-bis(3-t-butyl-4-hydroxyphenyl)-propane, 2,2-bis(3-cyclohexyl-1-4-hydroxyphenyl)propane, 2,2-bis(3-allyl-4-hydroxyphenyl)propane, 2,2-bis(3-methoxy-4-hydroxyphenyl)propane, 2,2-bis(4-hydroxyphenyl)hexafluoropropan,1,1-dichloro-2,2-bis(4-hydroxyphenyl)ethylene, 1,1-dibromo-2,2-bis(4-hydroxyphenyl)ethylene, 1,1-dichloro-2,2-bis(5-phenoxy-4-hydroxyphenyl)ethylene, 4,4'-dihydroxybenzophenone, 3,3-bis(4-hydroxyphenyl)-2-butanone, 1,6-bis(4-hydroxyphenyl)-1,6-hexonedione, ethylene glycol bis(4-hydroxyphenyl)ether, bis(4-hydroxyphenyl)ether, bis(4-hydroxyphenyl)sulfide, bis(4-hydroxyphenyl)sulfoxide, bis(4-hydroxyphenyl)sulfone, 9,9-bis(4-hydroxyphenyl)fluorine, 2,7-dihydroxypyrene, 6,6'-dihydroxy-3,3,3',3'-tetramethylspiro(bis)indane ("spirobiindane bisphenol"), formylated dicyclopentadiene (dimethylol dicyclopentadiene), 3,3-bis(4-hydroxyphenyl)phthalide, 2,6-dihydroxydibenzo-p-dioxin, 2,6-dihydrozythianthrene, 2,7-dihydroxyphenoxathin, 2,7-dihydroxy-9,10-dimethylphenaxine, 3,6-dihydroxydibenzofuran, 3,6-dihydroxydibenzothiophene, and 2,7-dihydroxycarbazole, and the like, as well as combinations comprising at least one of the foregoing dihydroxy compounds. Where it is desirable to use them, aliphatic diols useful in the preparation of polyester polymers are straight claim, branched, or cycloaliphatic, and may contain from 2 to 12 carbon atoms. Examples of suitable diols include ethylene glycol, propylene glycols such as 1,2- and 1,3-propylene glycol, 1,3- and 1,4-butanediol, diethylene glycol, 2,2-dimethyl-1,3-propanediol, 2-ethyl-1,3-propanediol, 2-methyl-1,3-propanediol, 1,3-propanediol, 1,3- and 1,5-pentanediol, dipropylene glycol, 2-methyl-1,5-pentanediol, 1,6-hexanadiol, 1,4-cyclohexanedimethanol including both cis- and trans-isomers, triethylene glycol, 1,10-decanediol, and combinations comprising at least one of the foregoing diols. Also useful is dimethanol bicyclooctane, dimethanol decalin, and 1.4-cyclohexane dimethanol, Where the diol is 1,4-cyclohexane dimethanol, a mixture of cis- to trans-isomers in ratios of 1:4 to 4:1 can be used.

In an embodiment, the polyester segment (sometimes referred to herein as a block) is a polyarylate comprising arylate units as illustrated in formula (7): 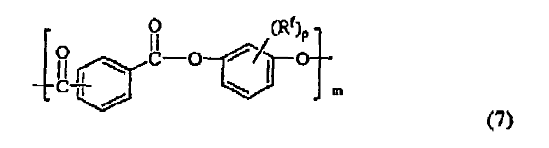 wherein R^{f} and p are previously defined for formula (2). Where p is 0, R^{f} is hydrogen. Also in formula (7), m is greater than or equal to 2, where m is the number of arylate units present in the polyarylate. In an embodiment, m is 2 to 20, specifically 2 to 15, more specifically 2 to 10, and more specifically 2 to 8.

Thus, in an embodiment, useful polyarylate blocks comprise, for example, isophthalate-terephthalate-resorcinol ester units, isophthalate-terephthalate-bisphenol-A ester units, or a combination comprising at least one of these. As used herein, isophthalate-terephthalate-resorcinol ester units comprise a combination isophthalate esters, terephthalate esters, and resorcinol esters. In a specific embodiment, isophthalate-terephthalate-resorcinol ester units comprise a combination of isophthalate-resorcinol ester units and terephthalate-resorcinol ester units. In an embodiment, poly(isophthalate-terephthalate-resorcinol ester) esters, poly(isophthalate-terephthalate-bisphenol-A) esters, poly[(isophthalate-terephthalate-resorciool ester) ester-co-(isophthalate-terephthalate-bisphenol-A)] ester, or a combination comprising at least one of these polyester blocks. While it is contemplated that other polyester segments may be used in the carboxylic acid end-capped oligomers, poly(isophthalate-terephthalate-resorcinol ester) esters, also referred to as ITR polyesters, are particularly suited for use in compositions disclosed herein. Also contemplated are aromatic polyesters with a minor amount, e.g., from 0.5 to 10 percent by weight, of units derived from an aliphatic diacid and/or an aliphatic polyol to make co-polyesters.

The carboxylic acid end-capped polyarylate-soft block oligomers comprise polyester units of formula (1) and a soft block linking unit L, as shown in formula (8): 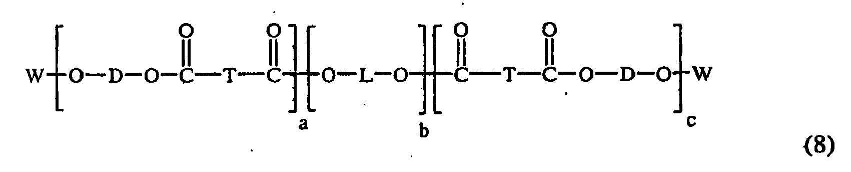 wherein T and D are as defined above, L is a soft block, W is an end group, a and c are each independently 0 to 20 with the proviso that the sum of a+c is 4 to 40, and b is 1 to 3. In an embodiment, a and c are each independently 1 to 20, and b is 1.

In an embodiment, L is a soft-block unit. As used herein, the term "soft block" is used to describe an oligomeric or polymeric unit having a Tg lower than that of the polyester units with which it is copolymerized. Soft blocks desirably have thermal. stability to melt reaction conditions at temperatures of at least 260°C. Specifically as used herein, suitable soft blocks include polyethers including polyalkylene oxides; polyimides; polyolefins; polysiloxanes, and the like. Copolymers comprising one or more soft blocks, as defined herein, may also be used. Such copolymers include polyetherimides, polyolefin-polyalkylene ethers, and the like. Compositions comprising at least one of the above soft blocks may also be used. Soft block units, when copolymerized with ester units, desirably form an A-B-A triblock copolymer as shown in formula (8) wherein b is one. It will be understood by one skilled in the art that, for oligomers of formula (8), there is a distribution of soft blocks having a numerically averaged number of soft blocks b for all oligomeric species present. Therefore, where b is one, each polymer chain has a numerical average of a single soft block moiety present in the carboxylic acid end-capped oligomer. In an embodiment, the soft block is present along with polyarylate units in a molar ratio of 1:4 to 1:40, specifically 1:4 to 1:30, more specifically 1:4 to 1:20, and still more specifically 1:4 to 1:16.

The carboxylic acid end-capped oligomer has end groups W. In an embodiment, each W is independently a hydrogen atom (H) or a dicarboxylic acid residue having a free carboxylic acid group, and which is derived from the dicarboxylic acids used to form the carboxylic acid end-capped oligomer. In an embodiment, the molar percentage of carboxylic acid end groups, expressed as a percentage of the total number of end groups for all of the oligomeric species in the carboxylic acid end-capped oligomer, is greater than or equal to 60 mol%, specifically greater than or equal to 65 mol%, more specifically greater than or equal to 70 mol%, still more specifically greater than or equal to 80 mol%, and still more specifically greater than or equal to 90 mol%. In another embodiment, the number of free carboxylic acid end groups, as determined by titration using a base, are greater than or equal to 200 milliequivalents of titrable free carboxylic acid per kilogram of the oligomer (meq/Kg), specifically greater than or equal to 400 milliequivalents per kilogram (meq/Kg), more specifically greater than or equal to 600 milliequivalents per kilogram (meq/Kg), and still more specifically greater than or equal to 800 milliequivalents per kilogram (meq/Kg).

The soft block unit L is derived from an oligomeric or polymeric dihydroxy compound having the general formula HO-L-OH, wherein L is the soft block unit. Examples of oligomeric or polymeric hydroxy end-capped soft block compounds from which the soft block units may be derived include, but are not limited to: dihydroxy poly(alkylene oxide)s; hydroxy end-capped polyimides; end group functionalized polyolefins; hydroxy end-capped polysiloxanes; and the like; or a combination comprising at least one of the foregoing. Specifically suitable soft block polymers are non-reactive with the components of the polyarylate reaction and are resistant to chain-scissioning and exchange reactions with the polyarylate.

Suitable soft block materials include polyethers having general structure H-(-O-C₁₋₂₀)_{w}-OH, wherein C₁₋₂₀ is typically a branched or straight, substituted or unsubstituted alkylene group, and w is 1 to 500. When present, a substituent on the C₁₋₂₀ alkylene group can be, for example, nitro, hydroxy, thio, halogen, C₁-C₈ alkoxy, C₆-C₂₀ aryl, or C₆-C₂₀ aryloxy. Suitable C₁₋₂₀ alkylene groups include ethanediyl, 1,2-propanediyl, 1,3-propanediyl, 1,2-butanediyl, 1,3-butanediyl, 1,4-butanediyl, 2,3-butanediyl, 1,2-pentanediyl, 1,3-pentanediyl, 1,4-pentanediyl, 1,5-pentanediyl, 2,3-pentanediyl, 2,4-pentanediyl, 2-methyl-1,2-butanediyl, 2-methyl-1,3-butanediyl, 2-methyl-1,4-butanediyl, 2-methyl-2,3-butanediyl, 2,2-dimethyl-1,2-propanediyl, 2,2-dimethyl-1,3-propanediyl, 3,3-dimethyl-1,2-propanediyl, 1,1-dimethyl-2,3-propanediyl, 1,2-hexanediyl, 1,3- hexanediyl, 1,4- hexanediyl, 1,5- hexanediyl, 1,6- hexanediyl, 2,3-hexanediyl, 2,4- hexanediyl, 2,5- hexanediyl, 2-methyl-1,2-pentanediyl, 2-methyl-1,3-pentanediyl, 2-methyl-1,4-pentanediyl, 2-methyl-2,3-pentanediyl, 2-methyl-2,4-pentanediyl, 2,2-dimethyl-1,2-butanediyl, 2,2-dimethyl-1,3-butanediyl, 3,3-dimethyl-1,2-butanediyl, 1,1-dimethyl-2,3-butanediyl, and the like; isomers of octanediyl, decanediyl, undecanediyl, dodecanediyl, hexadecanediyl, octadecanediyl, icosananediyl, and docosananediyl; and substituted and unsubstituted cyclopropanediyl, cyclobutanediyl, cyclopentanediyl, cyclohexanediyl 1,4-diylmethyl cyclohexane, polyalkylenediyl units, such as ethylenediyl, 1,2-propylenediyl, 1,3-propylenediyl, 1,2-butylediyl, 1,4-butylenediyl, 1,6-hexylenediyl, and the like.

Specifically suitable polyalkylene oxides include hydroxy end-capped poly(alkylene oxide)s such as polyethylene glycol, polypropylene glycol, poly(1,4-butylene) glycol, block or random poly (ethylene glycol)-co-(propylene glycol) copolymers, and the like, and a combination comprising at least one of the foregoing polyalkylene oxides.

Thermoplastic polyimides may also be used as soft blocks, specifically those having the general formula (9): 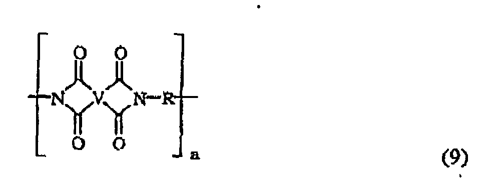 wherein a is greater than 1, specifically 10 to 1,000, or more specifically 10 to 500, R is a C₂₋₃₀ alkylene radical, a C₆₋₃₀ alicyclic radical, a C₆₋₃₀ aromatic radical; and V is a tetravalent linker without limitation, as long as the linker does not impede synthesis or use of the polyimide. Suitable linkers include but are not limited to: (a) substituted or unsubstituted, saturated, unsaturated or aromatic monocyclic and polycyclic groups having 5 to 50 carbon atoms, (b) substituted or unsubstituted, linear or branched, saturated or unsaturated alkyl groups having 1 to 30 carbon atoms; or combinations comprising at least one of the foregoing. Suitable substitutions and/or linkers include, but are not limited to, ethers, epoxides, imides, esters, and combinations comprising at least one of the foregoing. At least a portion of the linker unit V contains a portion derived from a bisphenol. Desirably linkers include but are not limited to tetravalent aromatic radicals.

Exemplary classes of polyimides can include polyetherimides, specifically those polyetherimides which are melt processable.

In an embodiment, the polyimide may be a copolymer comprising imide groups of the formula (9), wherein R is as previously defined for formula (9) and V includes, but is not limited to, radicals of formulas (10). 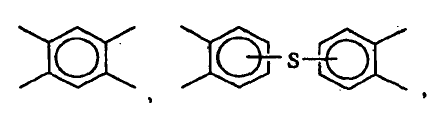 and 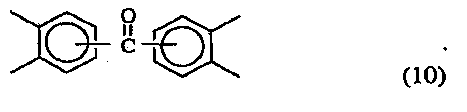 The polyetherimide can be prepared by various methods, including, but not limited to, the reaction of an aromatic bis(anhydride) with an organic diamine.

Illustrative examples of aromatic bis(ether anhydride)s of formula (9) include: 2,2-bis[4-(3,4-dicarboxyphenoxy)phenyl]propane dianhydride; 4,4'-bis(3,4-dicarboxyphenoxy)diphenyl ether dianhydride; 4,4'-bis(3,4-dicarboxyphenoxy)diphenyl sulfide dianhydride; 4,4'-bis(3,4-dicarboxyphenoxy)benzophenone dianhydride; 4,4'-bis(3,4-dicarboxyphenoxy)diphenyl sulfone dianhydride; 2,2-bis[4-(2,3-dicarboxyphenoxy)phenyl]propane dianhydride; 4,4-bis(2,3-dicarboxyphenoxy)diphenyl ether dianhydride; 4,4'-bis(2,3-dicarboxyphenoxy)diphenyl sulfide dianhydride; 4,4'-bis(2,3-dicarboxyphenoxy)benzophenone dianhydride; 4,4'-bis(2,3-dicarboxyphenoxy)diphenyl sulfone dianhydride; 4-(2,3-dicarboxyphenoxy)-4'-(3,4-dicarboxyphenoxy)diphenyl-2,2-propane dianhydride; 4-(2,3-dicarboxyphenoxy)-4'-(3,4-dicarboxyphenoxy)diphenyl ether dianhydride; 4-(2,3-dicarboxyphenoxy)-4'-(3,4-dicarboxyphenoxy)diphenyl sulfide dianhydride; 4-(2,3-dicarboxyphenoxy)-4'-(3,4-dicarboxyphenoxy)benzophenone dianhydride and 4-(2,3-dicarboxyphenoxy)-4'-(3,4-dicarboxyphenoxy)diphenyl sulfone dianhydride, as well as various mixtures comprising at least one of the foregoing.

A diamino compound is reacted with the dianhydride to provide the R group of formula (9). Examples of suitable compounds are ethylenediamine, propylenediamine, trimethylenediamine, diethylenetriamine, triethylenetetramine, hexamethylenediamine, heptamethylenediamine, octamethylenediamine, nonamethylenediamine, decamethylenediamine, 1,12-dodecanediamine, 1,18-octadecanediamine, 3-methylheptamethylenediamine, 4,4-dimethylheptamethylenediamine, 4-methylnonamethylenediamine, 5-methylnonamethylenediamine, 2,5-dimethylhexamethylenediamine, 2,5-dimethylheptamethylenediamine, 2, 2-dimethylpropylenediamine, N-methyl-bis (3-aminopropyl) amine, 3-methoxyhexamethylenediamine, 1,2-bis(3-aminopropoxy) ethane, bis(3-aminopropyl) sulfide, 1,4-cyclohexanediamine, bis-(4-aminocyclohexyl) methane, m-phenylenediamine, x-phenylenediamine, 2,4-diaminotoluene, 2,6-diaminotoluene, m-xylylenediamine, p-xylylenediamine, 2-methyl-4,6,diethyl-1,3-phenylene-diamine, 5-methyl-4,6-diethyl-1,3-phenylene-diamine, benzidine, 3,3'-dimethylbenzidine, 3,3'-dimethoxybenzidine, 1,5-diaminonaphthalene, bis(4-aminophenyl) methane, bis(2-chloro-4-amio-3, 5-diethylphenyl) methane, bis(4-aminophenyl) propane, 2,4-bis(b-amino-t-butyl) toluene, bis(p-b-amino-t-butylphenyl) ether, bis(p-b-methyl-o-aminophenyl) benzene, bis(p-b-methyl-o-aminopentyl) benzene, 1, 3-diamino-4-isopropylbenzene, bis(4-aminophenyl) sulfide, bis (4-aminophenyl) sulfone, bis(4-aminophenyl) ether and 1,3-bis(3-aminopropyl) tetramethyldisiloxane. Mixtures comprising at least one of the foregoing may also be used.

When polyetherimide/polyimide copolymers are employed, a dianhydride, such as pyromellitic anhydride, may be used in combination with a bis(ether anhydride). Exemplary polyetherimide resins comprise more than 1, typically 10 to 1,000, or more specifically, 10 to 500 structural units.

Soft blocks may also comprise functionalized polyolefins; specifically end-capped polyolefins having hydroxyl or carboxylic acid end groups or side chain functionality. Polyolefins suitable as soft block units include those of the general structure, CₙH₂ₙ. Examples of polyolefins include dihydroxy derivatives of polyethylene, polypropylene, polybutylene, polyisobutylene, and poly(ethylene-co-propylene). Specifically useful homopolymers include polyethylene, LLDPE (linear low density polyethylene), HDPE (high density polyethylene) and MDPE (medium density polyethylene) and isotatic polypropylene.

Copolymers of polyolefins may also be used such as copolymers of ethylene and alpha olefins like propylene and 4-methylpentene-1 and copolymers of ethylene and rubber such as butyl rubber. Copolymers of ethylene and C₃-C₁₀ monoolefins and nonconjugated dienes, herein referred to as EPDM copolymers, may be used. Examples of C₃-C₁₀ monoolefins for EPDM copolymers include propylene, 1-butene, 2-butene, 1-pentene, 2-pentene, 1-hexene, 2-hexene, and 3-hexene. Suitable dienes include 1,4-hexadiene and monocylic and polycyclic dienes. Mole ratios of ethylene to other C₃-C₁₀ monoolefin monomers may be from 95:5 to 5:95 with diene units being present in the amount of from 0.1 to 10 mol%. EPDM copolymers can also be functionalized with a hydroxyl group, acyl group, or electrophilic group for grafting.

Polysiloxanes may also be used as soft blocks. The polysiloxane (also referred to herein as "polydiorganosiloxane") blocks of the copolymer comprise repeating siloxane units (also referred to herein as "diorganosiloxane units") of formula (11): 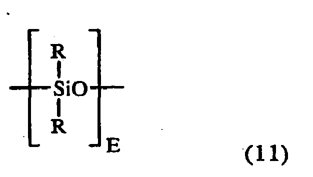 wherein each occurrence of R is same or different, and is a C₁₋₁₃ monovalent organic radical. For example, R may independently be a C₁-C₁₃ alkyl group, C₁-C₁₃ alkoxy group, C₂-C₁₃ alkenyl group, C₂-C₁₃ alkenyloxy group, C₃-C₆ cycloalkyl group, C₃-C₆ cycloalkoxy group, C₆-C₁₄ aryl group, C₆-C₁₀ aryloxy group, C₇-C₁₃ arylalkyl group, C₇-C₁₃ arylalkoxy group, C₇-C₁₃ alkylaryl group, or C₇-C₁₃ alkylaryloxy group. The foregoing groups may be fully or partially halogenated with fluorine, chlorine, bromine, or iodine, or a combination thereof. Combinations of the foregoing R groups may be used in the same copolymer.

The value of E in formula (11) may vary widely depending on the type and relative amount of each component in the thermosetting composition, the desired properties of the composition, and like considerations. Generally, E may have an average value of 2 to 1,000, specifically 2 to 500, and more specifically 5 to 100. In one embodiment, E has an average value of 10 to 75, and in still another embodiment, E has an average value of 40 to 60.

Useful polysiloxane compounds have hydroxy end groups suitable for reacting with the dicarboxylic acids of the polyarylate blocks. The hydroxy end groups may be linked to the polysiloxane through a straight chain or branched C₁₋₃₀ alkyl, C₆₋₃₀ aryl, C₇₋₃₀ arylalkyl, or C₇₋₃₀ alkylaryl linking unit, wherein the end groups are attached to the polysiloxane chain end through a carbon or a heteroatom on the linking group. In an embodiment, units of formula (11) may be derived from the corresponding dihydroxy compound of formula (12): 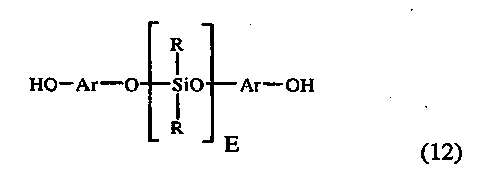 wherein E is as defined above; each R- may independently be the same or different, and is as defined for formula (11), above; and each Ar may independently be the same or different, and is a substituted or unsubstituted C₆-C₃₀ arylene radical, wherein the bonds are directly connected to an aromatic moiety. Suitable Ar groups in formula (12) may be derived from a C₆-C₃₀ dihydroxyarylene compound. Compounds of formula (12) may be obtained by the reaction of a dihydroxy compound of formula (4) with, for example, an alpha, omega-bisacetoxypolydiorganosiloxane under phase transfer conditions.

In another embodiment, polydiorganosiloxane blocks may be derived from dihydroxy compounds of formula (13): 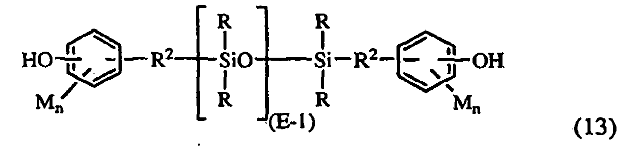 wherein R and E are as described above for formula (12). Each R² in formula (13) is independently a divalent C₂-C₈ aliphatic group. Each M in formula (13) may be the same or different, and may be a halogen, cyano, nitro, C₁-C₈ alkylthio, C₁-C₈ alkyl, C₁-C₈ alkoxy, C₂-C₈ alkenyl, C₂-C₈ alkenyloxy group, C₃-C₈ cycloalkyl, C₃-C₈ cycloalkoxy, C₆-C₁₀ aryl, C₆-C₁₀ aryloxy, C₇-C₁₂ arylalkyl, C₇-C₁₂ arylalkoxy, C₇-C₁₂ alkylaryl, or C₇-C₁₂ alkylaryloxy, wherein each n is independently 0, 1, 2, 3, or 4.

Thus, in an embodiment, suitable carboxylic acid end-capped oligomers of formula (8) include Carboxylic acid end-capped poly(isophthalate-terephthalate-resorcinol ester)-co-poly(alkylene oxide) oligomers; carboxylic acid end-capped poly(isophthalate-terephthalate-resorcinol ester)-co-polyimide oligomers; carboxylic acid end-capped poly(isophthalate-terephthalate-resorcinol ester)-co-polyetherimide oligomers; carboxylic acid end-capped poly(isophthalate-terephthalate-resorcinol ester)-co-polyolefin oligomers; carboxylic acid end-capped poly(isophthalate-terephthalate-resorcinol ester)-co-polysiloxane oligomers; or a combination comprising at least one of these. In an exemplary embodiment, a suitable carboxylic acid end-capped oligomer is carboxylic acid end-capped poly(isophthalate-terephthalate-resorcinol ester)-co-poly(ethylene oxide) oligomer.

In an embodiment, the glass transition temperature (Tg) of a carboxylic acid end-capped oligomer comprising a polyarylate unit and a soft block unit is lower that of a similar polyarylate oligomer but without the soft block unit. In an exemplary embodiment, carboxylic acid end-capped poly(isophthalate-terephthalate-resorcinol ester)-co-poly(ethylene oxide) oligomer prepared by the above method may have a Tg of 20 to 80°C, specifically 25 to 75°C, and specifically 30 to 70°C.

The carboxylic acid end-capped oligomers may have a weight averaged molecular weight (Mw) of 1,000 to 40,000, specifically 2,000 to 30,000, more specifically 3,000 to 25,000, and still more specifically 5,000 to 20,000, as measured using gel permeation chromatography (GPC) using a crosslinked styrene-divinylbenzene column and as calibrated using polystyrene standards:
Carboxylic acid end-capped oligomers, as disclosed herein, are prepared by melt polymerization methods. The condensation reaction between the dicarboxylic acid, dihydroxy compound, and soft block is thus carried out in a single phase in the presence of a diaryl ester, and where desired, a catalyst. Solvent, may optionally be present in quantities sufficient to provide a free-flowing melt. Where used, such solvents are selected such that they may be included in a thermosetting composition comprising the carboxylic acid end-capped oligomer, without substantially adversely affecting the desired properties of the carboxylic acid end-capped oligomer. The condensation may be carried out at a temperature of 200 to 350°C, specifically 220 to 320°C, more specifically 250 to 300°C, and still more specifically 260 to 290°C. A temperature hold at the condensation temperature is maintained for 100 to 300 minutes, and specifically 150 to 200 minutes. Volatile components may be removed under reduced pressure of less than or equal to 150 millibars (mbar), specifically less than or equal to 100 mbar, more specifically less than or equal to 80 mbar, and still more specifically less than or equal to 70 mbar, where vacuum is maintained for 5 to 60 minutes, specifically 10 to 45 minutes, more specifically 15 to 30 minutes. Removal of volatile components under reduced pressure may be done during the condensation, after the condensation, or both during and after the condensation. In an embodiment, condensation is done by melt reacting.

In an embodiment, in a method of making a carboxylic acid end-capped oligomer, a dicarboxylic acid, dihydroxy compound, a hydroxy end-capped soft block compound, a diaryl carbonate, and a catalyst are combined. In an embodiment, the dicarboxylic acid is isophthalic acid, terephthalic acid, or a combination comprising at least one of these dicarboxylic acids. In a specific embodiment, the dicarboxylic acid is a combination of isophthalic acid and terephthalic acid in a molar ratio of 0.5:1 to 2:1.

In another embodiment, the molar ratio of hydroxy end-capped soft block compound to dihydroxy compound is 1:4 to 1:40, specifically 1:4 to 1:30, more specifically 1:4 to 1: 20, and still more specifically 1:4 to 1:16. The molar ratio of dicarboxylic acid to the combined molar amounts of dihydroxy compound and hydroxy end-capped soft block compound is 1.01:1 to 2:1, specifically 1,1:1 to 1.8:1, more specifically 1.2:1 to 1.7:1, and still more specifically 1.3:1 to 1.5:1. The molar amounts of diaryl carbonate to the combined molar amounts of dihydroxy compound and hydroxy end-capped soft block compound is 1.5:1 to 3:1, specifically 1.6:1 to 2.5:1, more specifically 1.7:1 to 2.3:1, and still more specifically 1.8:1 to 2.1:1.

Suitable catalysts may be transition metal catalysts or basic catalysts. Suitable transition metal catalysts may be titanium-based catalysts, including alkyl-substituted titanium catalysts. A co-catalyst may also be present with the catalyst. In an exemplary embodiment, a suitable catalyst and co-catalyst is tetrabutyl titanate (TBT) with sodium dihydrogen phosphate. In another exemplary embodiment, a suitable titanium and silica-based catalyst is C94 catalyst, available from Acordis Industrial Fibers, Inc. A base may also be used as a catalyst. Suitable bases include metal hydroxides, metal carbonates and bicarbonates, metal carboxylates, metal alkoxides, metal phenoxides, tetraalkylphosphonium hydroxides, tetraalkylphosphonium phenoxides, tetraalkylphosphonium carboxylates, or a combination comprising at least one of the foregoing bases. Examples of specifically suitable bases include metal hydroxides such as sodium hydroxide, potassium hydroxide, and the like, or a combination comprising at least one of these. Where used, the catalyst may be present in an amount of 1 to 1,000 ppm, specifically 2 to 500 ppm, and more specifically 5 to 300 ppm, based on the total weight of the reaction composition.

In an embodiment, the diaryl carbonate is diphenyl carbonate, bis (4-methylphenyl) carbonate, bis-(4-chlorophenyl)carbonate, bis(4-acetylphenyl)carbonate, bis(4-methoxyphenyl)carbonate, bis(methylsalicyl) carbonate (BMSC), or a combination comprising one or more of these diaryl carbonates.

Proportions, types, and amounts of the reaction ingredients may be determined and selected by one skilled in the art to provide carboxylic acid end-capped oligomers having desirable physical properties including but not limited to, for example, suitable molecular weight, melt-volume flow rate (MVR), and glass transition temperature. In an example of a specific embodiment, the dihydroxy compound used is resorcinol. In another example of a specific embodiment, a suitable dicarboxylic acid is a mixture of isophthalic acid and terephthalic acid. In another exemplary embodiment, the hydroxy end-capped soft block is a polyethylene glycol.

In another embodiment dicarboxylic acid residues may be present in the biphasic reaction medium after condensation with the dihydroxy compound and hydroxy end-capped soft block compound is complete, in an amount of less than or equal to 5 wt%. more specifically less than or equal to 2 wt%, more specifically less than or equal to 1 wt%, still more specifically less than or equal to 0.5 wt%, of the initial charge of dicarboxylic acid.

It has previously been found that ITR oligomers having only polyarylate structure may be prepared using a melt reaction, in which iso- and terephthalic acids are reacted with diphenyl carbonate and resorcinol. When the reaction is carried out at a suitably high temperature, such as 260 to 290°C, the diaryl carbonate, such as, for example, diphenyl carbonate (DPC), can form a phenyl ester in situ, which then reacts with the dihydroxy compound to release a phenol and carbon dioxide as by-products. Melt processing has advantages in purity and in process work-up over solution-phase polymerizations such as interfacial polymerizations, in that neither acid chlorides, solvents, nor stoichiometric amounts" of bases are necessary for reaction. The presence of low amounts (down to 500 ppm or lower) residues of commonly used bases, such as amines and amine salts, can have a substantially adverse affect on the shelf life of a composition comprising unreacted crosslinking groups such as epoxy groups, isocyanate groups, or anhydride groups.

In an exemplary melt process, an excess of iso- and terephthalic acids are reacted with resorcinol (RES), in the presence of diphenyl carbonate (DPC). The iso- and terephthalic acids form intermediate phenyl iso- and terephthalates in situ, which then undergo transesterification with resorcinol (RES). Phenol by-product was distilled off under vacuum, leading to a resorcinol-teminated oligomer. As the initially insoluble reactants condense, the reaction becomes a clear melt. After the reaction clears, polyarlyate oligomers can be isolated directly without further workup.

However, a significant disadvantages of using polyarylates prepared by this method is the high glass transition temperature (Tg) and/or or melting point of the oligomers so prepared. High Tg in the oligomer can interfere with the ability of the carboxylic acid end groups to combine with crosslinking compounds to form crosslinked coatings, specifically at the temperatures desired for the crosslinking cure of the coating compositions (desirably less than or equal to 150°C). Soft block units having a glass transition temperature lower than the polyarylate can be included in the oligomer to increase plasticity and facilitate crosslinking. However inclusion of soft block units to decrease the glass transition temperature of the oligomer may lead to exchange reactions with the polyarylates. Such exchange can lead to shorter blocks, and a loss in properties of the polymer. Soft block compounds such as, for example, polycaprolactonediol oligomers, which are used in the interfacial method for the insertion of soft blocks in the ITR, have been found to undergo such exchange reactions with the polyarylates when the melt process is used. Disadvantageously, such cross-reaction can give rise to a random copolymer with a Tg that is not decreased to the desired extent as would be expected with a block copolymer.

Surprisingly, a soft block can be included in the structure of the carboxylic acid end-capped polyarylate-soft block oligomers using a melt reaction using iso- and/or terephthalic acids, a resorcinol, a soft block compound having hydroxy end groups, and diphenyl carbonate, without substantially adversely affecting the properties of the soft block component. Desirably, the soft block composition is selected to have a thermal and chemical stability that allows for it to be incorporated under the melt reaction conditions without substantial decomposition, thereby preserving the desired properties of the soft block, and the carboxylic acid end-capped oligomer. In an exemplary embodiment, a carboxylic acid end-capped oligomer so prepared using poly(isophthalate-terephthalate-resorcinol ester) polyarylate units has a glass transition temperature (Tg) of 20 to 80°C, which is substantially lower than that of poly(isophthalate-terephthalate-resorcinol ester) polymer which typically has a Tg of 140 to 150°C. The carboxylic acid end-capped polyarylate-soft block oligomer having a lower Tg is thus curable with a reactive crosslinking compound at low temperatures of less than or equal to 150°C, where such temperatures are suitable for preparing powder coatings. The carboxylic acid end-capped oligomer prepared by melt reacting is desirably free of amine compounds. As used herein, "free of amine compounds" means wherein the amount of amine compound present is less than or equal to 500 ppm, specifically less than or equal to 100 ppm, more specifically less than or equal to 50 ppm, still more specifically less than or equal to 10 ppm, and still more specifically less than or equal to 1 ppm.

The carboxylic acid end-capped oligomers disclosed herein may be used to prepare a thermosetting composition. The thermosetting composition can further include a crosslinking compound, additional polymer, a catalyst, and other additives. Crosslinking compounds can comprise at least one organic species having one or more functional groups that may be the same or different, wherein the functional groups can react with the terminal carboxyl groups of the carboxylic acid end-capped oligomer. While any functional group capable of reaction with the terminal carboxylic acid groups of the carboxylic acid end-capped oligomer may be used, the functional groups of crosslinking compound may include isocyanates, epoxides, aliphatic esters, hydroxymethylene groups, or aromatic esters. In an embodiment, a crosslinking compound may comprises an aliphatic polyisocyanate. In an alternate embodiment, crosslinking compound comprises IPDI-Trimer (isocyanurate of isophorone diisocyanate, commercially known as VESTANAT^{®} T 1890 from Degussa AG). In yet another embodiment crosslinking compound comprises one or more "blocked isocyanates". A blocked isocyanate refers to a molecule that possesses at least one latent isocyanate functional group, wherein upon heating, the carbamate can fragment to form an alcohol and an isocyanate. Thus, in an example of a blocked isocyanate, PhOC(O)-NH(CH₂)₆NH-C(O)OPh, the carbamate formed by reaction of 2 moles phenol with 1 mole of 1,10-hexamethylenediiosocyanate, represents a "blocked isocyanate" which upon heating fragments to the starting phenol and diisocyanate.

The crosslinking compound may be an epoxy resin precursor such as, for example, a polyglycidyl compound. In an exemplary embodiment, crosslinking compounds may include bisphenol-A diglycidyl ether (commercially known as EPON^{™} Resin 2002), available from Resolution Performance Products; triglycidylisocyanurate (TGIC; CAS No. 2451-62-9); and FINE CLAD^{®} A-229-30-A and A-272, available from Reichhold Inc.. which are polyacrylates containing glycidyl methacrylate-derived structural units. Other crosslinking compounds include hydroxymetyl compounds such as, for example, hydroxymethyl amides including polymeric hydroxymethyl (meth)acrylamides; hydroxymethylureas,; hydroxymethylisocyanurates; hydroxymethyl glycolurils; and the like. Typically, the concentration of crosslinking compound in the disclosed coating composition is in a range between 1 and 99 percent by weight of the total weight of the coating composition.

As noted, the coating compositions may comprise a cure catalyst to promote the reaction between the carboxylic acid end-capped oligomer and the crosslinking compound. The cure catalyst may be used where desired, and thus is optional. The catalyst may be selected from the group consisting of tertiary amines, quaternary ammonium salts, guanidinium salts, quaternary phosphonium salts, Lewis acids, and mixtures thereof. For example, benzyl trimethyl ammonium bromide (BTMAB), or hexaalkylguanidinium salts such as those disclosed in U.S. Patent No. 5,907,205 may be used as a catalyst. Typically, where used, the cure catalyst is present in an amount of 0.00001 to 10 percent by weight of the total weight the thermosetting composition.

The coating compositions of the present invention may contain one or more co-resins. The term "co-resin" is used to designate a polymeric species which does not fall within the class of materials belonging to the "organic species" of crosslinking compound because the co-resin does not possess functional groups capable of reaction with the terminal carboxy groups under conditions typically used for the formation of a coating. The co-resin may have either high or low molecular weight as defined herein. A high molecular weight co-resin is defined as having a weight average molecular weight of at least 15,000 grams per mole. A low molecular weight co-resin is defined as having a weight average molecular weight of less than 15,000 grams per mole. Polymers which are especially well suited for use as co-resins include polycarbonates including homopolycarbonates, copolycarbonates, polyester-polycarbonates, and polysiloxane-polycarbonates; polyesters; polyetherimides; polyphenylene ethers; addition polymers; and the like. Suitable addition polymers include homopolymers and copolymers, especially homopolymers of alkenylaromatic compounds, such as polystyrene, including syndiotactic polystyrene, and copolymers of alkenylaromatic compounds with ethylenically unsaturated nitriles, such as acrylonitrile and methacrylonitrile; dienes, such as butadiene and isoprene; and/or acrylic monomers, such as ethyl acrylate. These latter copolymers include the ABS (acrylonitrile-butadiene-styrene) and ASA (acrylonitrile-styrene-alkyl acrylate) copolymers. Addition polymers as used herein include polyacrylate homopolymers and copolymers including polymers comprising methacrylate units.

The thermosetting composition may comprise a co-resin comprising a polycarbonate blended with the carboxylic acid end-capped oligomer. As used herein, the terms "polycarbonate" and "polycarbonate resin", where used to describe a polymer or polymer segment, mean compositions having repeating structural carbonate units of the formula (14): 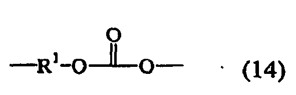 wherein at least 60 percent of the total number of R¹ groups are aromatic organic radicals and the balance thereof are aliphatic, alicyclic, or aromatic radicals. In one embodiment, each R¹ is an aromatic organic radical. Polycarbonates may be derived from the condensation of a carbonylating agent, e.g., phosgene, and a dihydroxy compound of general structure HO-R¹-OH, suitable examples of which include dihydroxy compounds of formula (2), formula (4), formula (5), or a combination comprising at least one of the foregoing.

"Polycarbonates" and "polycarbonate resins" as used herein further include homopolycarbonates, copolymers comprising different R¹ moieties in the carbonate (referred to herein as "copolycarbonates"), copolymers comprising carbonate units and other types of polymer units, such as ester units, and combinations comprising one or more of homopolycarbonates and copolycarbonates. As used herein, "combination" is inclusive of blends, mixtures, alloys, reaction products, and the like.

In a specific embodiment, where used, the polycarbonate can be a linear homopolymer derived from bisphenol A, in which each of A¹ and A² is (in formula (4)) p-phenylene and Y¹ is isopropylidene. The polycarbonates may have an intrinsic viscosity, as determined in chloroform at 25°C, of 0.3 to 1.5 deciliters per gram (dl/g), specifically 0.45 to 1.0 dl/g. The polycarbonates may have a weight average molecular weight (Mw) of 10,000 to 100,000, as measured by gel permeation chromatography (GPC) using a crosslinked styrene-divinyl benzene column, at a sample concentration of 1 milligram per milliliter, and as calibrated with polycarbonate standards.

Branched polycarbonates are also useful, as well as blends of a linear polycarbonate and a branched polycarbonate. The branched polycarbonates may be prepared by adding a branching agent during polymerization. These branching agents include polyfunctional organic compounds containing at least three functional groups selected from hydroxyl, carboxyl, carboxylic anhydride, haloformyl, and mixtures of the foregoing functional groups. Specific examples include trimellitic acid, trimellitic anhydride, trimellitic trichloride, tris-p-hydroxy phenyl ethane, isatin-bis-phenol, tris-phenol TC (1,3,5-tris((p-hydroxyphenyl)isopropyl)benzene), tris-phenol PA (4(4(1,1-bis(p-hydroxyphenyl)-ethyl) alpha, alpha-dimethyl benzyl)phenol), 4-chloroformyl phthalic anhydride, trimesic acid, and benzophenone tetracarboxylic acid. The branching agents may be added at a level of 0.05 to 2.0 wt% of the polycarbonate. All types of polycarbonate end groups are contemplated as being useful in the polycarbonate, provided that such end groups do not significantly affect desired properties of the thermosetting compositions.

The thermosetting composition may further comprise a polyester-polycarbonate, also known as polyester carbonate, copolyester-polycarbonate, and copolyestercarbonate. Such copolymers further contain, in addition to recurring carbonate chain units of the formula (14), repeating units of formula (1). Thus, in an embodiment, the polyester-polycarbonates may the structure shown in formula (15): 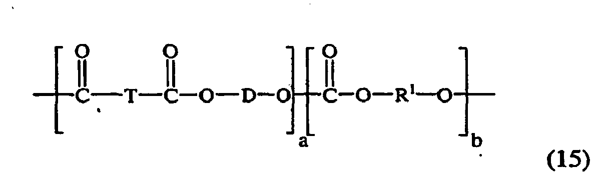 wherein T, D, and R¹ are as described above, and the molar ratio of a and b is 1:99 to 99:1.

In an embodiment, the polyester-polycarbonate can be derived from the reaction of a combination of isophthalic and terephthalic diacids (or derivatives thereof) with resorcinol, bisphenol A, or a combination comprising at least one of these. The polyester-polycarbonate polymer has a molar ratio of the isophthalate-terephthalate (ITR) ester units to the carbonate units in the polyester-polycarbonate of 1:99 to 99:1, specifically 5:95 to 95:5, more specifically 10:90 to 90:10, still more specifically 20:80 to 80:20. In a specific embodiment, the polyester-polycarbonate is a poly(isophthalate-terephthalate-resorcinol ester)-co-(bisphenol-A carbonate) polymer.

The polyester-polycarbonates may have a weight-averaged molecular weight (Mw) of 1,500 to 100,000, specifically 1,700 to 50,000, and more specifically 2,000 to 40,000. Molecular weight determinations arc performed using gel permeation chromatography (GPC), using a crosslinked styrene-divinylbenzene column and calibrated to polycarbonate references. Samples are prepared at a concentration of 1 mg/ml, and are eluted at a flow rate of 1.0 ml/min.

In addition to the polyester-polycarbonate polymers described above, the thermosetting composition may also comprise a polyester. Suitable polyesters include those polyesters having repeating units of formula (1). Useful polyesters may include aromatic polyesters, poly(alkylene esters) including poly(alkylene arylates), and poly(cycloalkylene diesters).

Examples of poly(alkylene terephthalates) include poly(ethylene terephthalate) (PET), poly(1,4-butylene terephthalate) (PBT), and poly(propylene terephthalate) (PPT). Also useful are poly(alkylene naphthoates), such as polyethylene, naphthanoate, (PEN), and poly(butylene naphthanoate) (PBN). A specifically suitable poly(cycloalkylene diester) is poly(1,4-cyclohexanedimethylene terephthalate) (PCT). Combinations comprising at least one of the foregoing polyesters may also be used.

Copolymers of poly(alkylene terephthalate)s are also useful. An example of a specifically useful copolymer includes poly(1,4-cyclohexanedimethylene terephthalate)-co-poly(ethylene terephthalate), abbreviated as PETG where the polymer comprises greater than or equal to 50 mole% of ethylene terephthalate ester units, and abbreviated as PCTG where the polymer comprises greater than 50 mole% of 1,4-cyclohexanedimethylene terephthalate ester units.

Other polyesters suitable for use herein include poly(cycloalkylene diester)s, specifically poly(alkylene cyclohexanedicarboxylate)s. Of these, a specific example is poly(1,4-cyclohexane-dimethanol-1,4-cyclohexanedicarboxylate) (PCCD), having recurring units of formula (16): 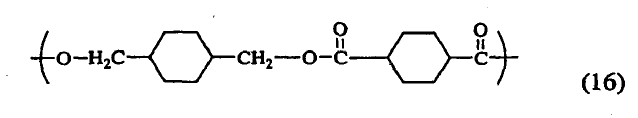 wherein, as described using formula (1), D is a dimethylene cyclohexane group derived from cyclohexane dimethanol, and T is a cyclohexane ring derived from cyclohexanedicarboxylate or a chemical equivalent thereof and is selected from the cis- or trans-isomer or a mixture of cis- and trans- isomers thereof.

The thermosetting composition may also comprise a polysiloxane-polycarbonate copolymer, also referred to as a polysiloxane-polycarbonate. The polysiloxane (also referred to herein as "polydiorganosiloxane") blocks of the copolymer comprise repeating siloxane units (also referred to herein as "diorganosiloxane units") of formula (11) above, wherein R and E are as described above. Where E is of a lower value, e.g., less than 40, it may be desirable to use a relatively larger amount of the polycarbonate-polysiloxane copolymer. Conversely, where E is of a higher value, e.g., greater than 40, it may be necessary to use a relatively lower amount of the polycarbonate-polysiloxane copolymer. A combination of a first and a second (or more) polysiloxane-polycarbonate copolymer may be used, wherein the average value of E of the first copolymer is less than the average value of E of the second copolymer.

Specifically suitable polysiloxane blocks for use in the polysiloxane-polycarbonates include those derived from hydroxy end-capped polysiloxanes of formulas (12) and (13), and are copolymerized with carbonate units of formula (1) according to the methods of forming polycarbonates disclosed herein. The polysiloxane-polycarbonate may thus comprise 50 to 99 wt% of carbonate units and 1 to 50 wt% siloxane units. Within this range, the polysiloxane-polycarbonate copolymer may comprise 70 to 98 wt%, specifically 75 to 97 wt% of carbonate units and 2 to 30 wt%, specifically 3 to 25 wt% siloxane units.

Polysiloxane-polycarbonates may have a weight average molecular weight of 2,000 to 100,000, specifically 5,000 to 50,000 as measured by gel permeation chromatography using a crosslinked styrene-divinyl benzene column, at a sample concentration of 1 milligram per milliliter, and as calibrated with polycarbonate standards.

In an embodiment, the thermosetting composition comprises the co-resin, in addition to the carboxylic acid end-capped oligomer and crosslinking compound, wherein the co-resin is present in an amount of 1 to 99 wt%, specifically 5 to 50 wt%, and more specifically 5 to 30 wt%, based on the total weight of carboxylic acid end-capped oligomer and crosslinking compound.

Other additives may also be added to the thermosetting composition, with the proviso that the additives are selected so as not to adversely affect the desired properties of the thermosetting composition. Mixtures of additives may be used. Such additives may be mixed at a suitable time during the mixing of the components for forming the thermosetting composition. Suitable additives can include organic and inorganic pigments, dyes, impact modifiers, UV screeners, hindered amine light stabilizers, degassing agents, viscosity modifying agents, corrosion inhibitors, surface tension modifiers, surfactants, flame retardants, organic and inorganic fillers, stabilizers; and flow aids.

The thermosetting composition may include an impact modifier to increase its impact resistance, where the impact modifier is present in an amount that does not adversely affect the desired properties of the thermosetting composition. These impact modifiers include elastomer-modified graft copolymers comprising (i) an elastomeric (i.e., rubbery) polymer substrate having a Tg less than or equal to 10°C, more specifically less than or equal to -10°C, or more specifically -40° to -80°C, and (ii) a rigid polymeric superstrate grafted to the elastomeric polymer substrate. As is known, elastomer-modified graft copolymers may be prepared by first providing the elastomeric polymer, then polymerizing the constituent monomer(s) of the rigid phase in the presence of the elastomer to obtain the graft copolymer. The grafts may be attached as graft branches or as shells to an elastomer core. The shell may merely physically encapsulate the core, or the shell may be partially or essentially completely grafted to the core.

Suitable materials for use as the elastomer phase include, for example, conjugated diene rubbers; copolymers of a conjugated diene with less than or equal to 50 wt% of a copolymerizable monomer; olefin rubbers such as ethylene propylene copolymers (EPR) or ethylene-propylene-diene monomer rubbers (EPDM); ethylene-vinyl acetate rubbers; silicone rubbers; elastomeric C₁₋₈ alkyl (meth)acrylates; elastomeric copolymers of C₁₋₈ alkyl (meth)acrylates with butadiene and/or styrene; or combinations comprising at least one of the foregoing elastomers.

Suitable conjugated diene monomers for preparing the elastomer phase are of formula (17): 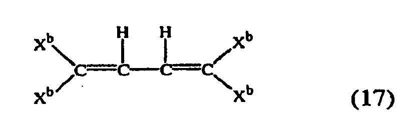 wherein each X^{b} is independently hydrogen, C₁-C₅ alkyl, or the like. Examples of conjugated diene monomers that may be used are butadiene, isoprene, 1,3-heptadiene, methyl-1,3-pentadiene, 2,3-dimethyl-1,3-butadiene, 2-ethyl-1,3-pentadiene; 1,3- and 2,4-hexadienes, and the like, as well as mixtures comprising at least one of the foregoing conjugated diene monomers. Specific conjugated diene homopolymers include polybutadiene and polyisoprene.

Copolymers of a conjugated diene rubber may also be used, for example those produced by aqueous radical emulsion polymerization of a conjugated diene and one or more monomers copolymerizable therewith. Vinyl aromatic compounds may be copolymerized with the ethylenically unsaturated nitrile monomer to form a copolymer, wherein the vinylaromatic compounds can include monomers of formula (18): 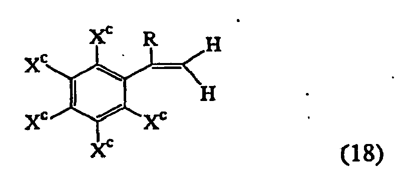 wherein each X^{c} is independently hydrogen, C₁-C₁₂ alkyl, C₃-C₁₂ cycloalkyl, C₆-C₁₂ aryl, C₇-C₁₂ arylalkyl, C₇-C₁₂ alkylaryl, C₁-C₁₂ alkoxy, C₃-C₁₂ cycloalkoxy, C₆-C₁₂ aryloxy, chloro, promo, or hydroxy, and R is hydrogen, C₁-C₅ alkyl, bromo, or chloro. Examples of suitable monovinyl aromatic monomers that may be used include styrene, 3-methylstyrene, 3,5-diethylstyrene, 4-n-propylstyrene, alpha-methylstyrene, alpha-methyl vinyltoluene, alpha-chlorostyrene, alpha-bromostyrene, dichlorostyrene, dibromostyrene, tetra-chlorostyrene, and the like, and combinations comprising at least one of the foregoing compounds. Styrene and/or alpha-methylstyrene may be used as monomers copolymerizable with the conjugated diene monomer.

Other monomers that may be copolymerized with the conjugated diene are monovinylic monomers such as itaconic acid, acrylamide, N-substituted acrylamide or methacrylamide, maleic anhydride, maleimide, N-alkyl-, aryl-, or haloaryl-substituted maleimide, glycidyl (meth)acrylates, and monomers of the generic formula (19): 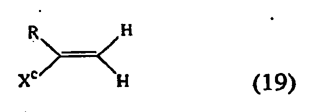 wherein R is hydrogen, C₁-C₅ alkyl, bromo, or chloro, and X^{c} is C₁-C₁₂ alkoxycarbonyl, C₁-C₁₂ aryloxycarbonyl, hydroxy carbonyl, or the like. Examples of monomers of formula (17) include, acrylic acid, methyl (meth)acrylate, ethyl (meth)acrylate, n-butyl (meth)acrylate, t-butyl (meth)acrylate, n-propyl (meth)acrylate, isopropyl (meth)acrylate, 2-ethylhexyl (meth)acrylate, and the like, and combinations comprising at least one of the foregoing monomers. Monomers such as n-butyl acrylate, ethyl acrylate, and 2-ethylhexyl acrylate are commonly used as monomers copolymerizable with the conjugated diene monomer. Mixtures of the foregoing monovinyl monomers and monovinylaromatic monomers may also be used.

Suitable (meth)acrylate monomers suitable for use as the elastomeric phase may be cross-linked, particulate emulsion homopolymers or copolymers of C₁₋₈ alkyl (meth)acrylates, in particular C₄₋₆ alkyl acrylates, for example n-butyl acrylate, t-butyl acrylate, n-propyl acrylate, isopropyl acrylate, 2-ethylhexyl acrylate, and the like, and combinations comprising at least one of the foregoing monomers. The C₁₋₈ alkyl (meth)acrylate monomers may optionally be polymerized in admixture with up to 15 wt% of comonomers of formulas (17), (18), or (19). Exemplary comonomers include but are not limited to butadiene, isoprene, styrene, methyl methacrylate, phenyl methacrylate, penethylmethacrylate, N-cyclohexylacrylamide, vinyl methyl ether, and mixtures comprising at least one of the foregoing comonomers. Optionally, up to 5 wt% a polyfunctional crosslinking comonomer may be present, for example divinylbenzene, alkylenediol di(meth)acrylates such as glycol bisacrylate, alkylenetriol tri(meth)acrylates, polyester di(meth)acrylates, bisacrylamides, triallyl cyanurate, triallyl isocyanurate, allyl (meth)acrylate, diallyl maleate, diallyl fumarate, diallyl adipate, triallyl esters of citric acid, triallyl esters of phosphoric acid, and the like, as well as combinations comprising at least one of the foregoing crosslinking compounds.

The elastomer phase may be polymerized by mass, emulsion, suspension, solution or combined processes such as bulk-suspension, emulsion-bulk, bulk-solution or other techniques, using continuous, semibatch, or batch processes. The particle size of the elastomer substrate is not critical. For example, an average particle size of 0.001 to 25 micrometers, specifically 0.01 to 15 micrometers, or even more specifically 0.1 to 8 micrometers may be used for emulsion based polymerized rubber lattices. A particle size of 0.5 to 10 micrometers, specifically 0.6 to 1.5 micrometers may be used for bulk polymerized rubber substrates. Particle size may be measured by simple light transmittance methods or capillary hydrodynamic chromatography (CHDF). The elastomer phase may be a particulate, moderately cross-linked conjugated butadiene or C₄₋₆ alkyl acrylate rubber, and preferably has a gel content greater than 70 wt%. Also suitable are mixtures of butadiene with styrene and/or C₄₋₆ alkyl acrylate rubbers.

The elastomeric phase may provide 5 to 95 wt% of the total graft copolymer, more specifically 20 to 90 wt%, and even more specifically 40 to 85 wt% of the elastomer-modified graft copolymer, the remainder being the rigid graft phase.

The rigid phase of the elastomer-modified graft copolymer may be formed by graft polymerization of a mixture comprising a monovinylaromatic monomer and optionally one or more comonomers in the presence of one or more elastomeric polymer substrates. The above-described monovinylaromatic monomers of formula (18) may be used in the rigid graft phase, including styrene, alpha-methyl styrene, halostyrenes such as dibromostyrene, vinyltoluene, vinylxylene, butylstyrene, parahydroxystyrene, methoxystyrene, or the like, or combinations comprising at least one of the foregoing monovinylaromatic monomers. Suitable comonomers include, fort example, the above-described monovinylic monomers and/or monomers of the general formula (19). In one embodiment, R is hydrogen or C₁-C₂ alkyl, and X^{c} is cyano or C₁-C₁₂ alkoxycarbonyl. Specific examples of suitable comonomers for use in the rigid phase include, methyl (meth)acrylate, ethyl (meth)acrylate, n-propyl (meth)acrylate, isopropyl (meth)acrylate, and the like, and combinations comprising at least one of the foregoing comonomers.

The relative ratio of monovinylaromatic monomer and comonomer in the rigid graft phase may vary widely depending on the type of elastomer substrate, type of monovinylaromatic monomer(s), type of comonomer(s), and the desired properties of the impact modifier. The rigid phase may generally comprise up to 100 wt% of monovinyl aromatic monomer, specifically 30 to 100 wt%, more specifically 50 to 90 wt% monovinylaromatic monomer, with the balance being comonomer(s).

Depending on the amount of elastomer-modified polymer present, a separate matrix or continuous phase of ungrafted rigid polymer or copolymer may be simultaneously obtained along with the elastomer-modified graft copolymer. Typically, such impact modifiers comprise 40 to 95 wt% elastomer-modified graft copolymer and 5 to 65 wt% graft (co)polymer, based on the total weight of the impact modifier. In another embodiment, such impact modifiers comprise 50 to 85 wt%, more specifically 75 to 85 wt% rubber-modified graft copolymer, together with 15 to 50 wt%, more specifically 15 to 25 wt% graft (co)polymer, based on the total weight of the impact modifier.

Another specific type of elastomer-modified impact modifier comprises structural units derived from at least one silicone rubber monomer, a branched acrylate rubber monomer having the formula H₂C=C(R^{d})C(O)OCH₂CH₂R^{e}, wherein R^{d} is hydrogen or a C₁-C₈ linear or branched alkyl group and R^{e} is a branched C₃-C₁₆ alkyl group; a first graft link monomer; a polymerizable alkenyl-containing organic material; and a second graft link monomer. The silicone rubber monomer may comprise, for example, a cyclic siloxane, tetraalkoxysilane, trialkoxysilane, (acryloxy)alkoxysilane, (mercaptoalkyl)alkoxysilane, vinylalkoxysilane, or allylalkoxysilane, alone or in combination, e.g., decamethylcyclopentasiloxane, dodecamethylcyclohexasiloxane, trimethyltriphenylcyclotrisiloxane, tetramethyltetraphenylcyclotetrasiloxane, tetramethyltetravinylcyclotetrasiloxane, octaphenylcyclotetrasiloxane., octamethylcyclotetrasiloxane and/or tetraethoxysilane.

Exemplary branched acrylate rubber monomers include iso-octyl acrylate, 6-methyloctyl acrylate, 7-methyloctyl acrylate, 6-methylheptyl acrylate, and so forth, alone, and in a combination comprising at least one of the foregoing. The polymerizable, alkenyl-containing organic material may be, for example, a monomer of formula (18) or (19), e.g., styrene, alpha-methylstyrene, or an unbranched (meth)acrylate such as methyl methacrylate, 2-ethylhexyl methacrylate, methyl acrylate, ethyl acrylate, n-propyl acrylate, or the like, alone or in combination.

The at least one first graft link monomer may be an (acryloxy)alkoxysilane, a (mercaptoalkyl)alkoxysilane, a vinylalkoxysilane, or an allylalkoxysilane, alone or in combination, e.g., (gamma-methacryloxypropyl) (dimethoxy)methylsilane and/or (3-mercaptopropyl) trimethoxysilane. The at least one second graft link monomer is a polyethylenically unsaturated compound having at least one allyl group, such as allyl methacrylate, triallyl cyanurate, or triallyl isocyanurate, alone or in combination.

The silicone-acrylate impact modifier compositions can be prepared by emulsion polymerization, wherein, for example at least one silicone rubber monomer is reacted with at least one first graft link monomer at a temperature from 30°C to 110°C to form a silicone rubber latex, in the presence of a surfactant such as dodecylbenzenesulfonic acid. Alternatively, a cyclic siloxane such as cyclooctamethyltetrasiloxane and tetraethoxyorthosilicate may be reacted with a first graft link monomer such as (gamma-methacryloxypropyl) methyldimethoxysilane, to afford silicone rubber having an average particle size from 100 nanometers to 2 micrometers. At least one branched acrylate rubber monomer is then polymerized with the silicone rubber particles, optionally in presence of a cross linking monomer, such as allylmethacrylate in the presence of a free radical generating polymerization catalyst such as benzoyl peroxide. This latex is then reacted with a polymerizable alkenyl-containing organic material and a second graft link monomer. The latex particles of the graft silicone-acrylate rubber hybrid may be separated from the aqueous phase through coagulation (by treatment with a coagulant) and dried to a fine powder to produce the silicone-acrylate rubber impact modifier composition. This method can be generally used for producing the silicone-acrylate impact modifier having a particle size from 100 nanometers to 2 micrometers.

Processes known for the formation of the foregoing elastomer-modified graft copolymers include mass, emulsion, suspension, and solution processes, or combined processes such as bulk-suspension, emulsion-bulk, bulk-solution or other techniques, using continuous, semibatch, or batch processes.

The foregoing types of impact modifiers, including SAN copolymers, can be prepared by an emulsion polymerization process that is free of basic materials such as alkali metal salts of C₆₋₃₀ fatty acids, for example sodium stearate, lithium stearate, sodium oleate, potassium oleate, and the like; alkali metal carbonates, amines such as dodecyl dimethyl amine, dodecyl amine, and the like; and ammonium salts of amines. Such materials are commonly used as surfactants in emulsion polymerization, and may catalyze transesterification and/or degradation of polycarbonates. Instead, ionic sulfate, sulfonate or phosphate surfactants may be used in preparing the impact modifiers, particularly the elastomeric substrate portion of the impact modifiers. Suitable surfactants include, for example, C₁₋₂₂ alkyl or C₇₋₂₅ alkylaryl sulfonates, C_{1- 22} alkyl or C₇₋₂₅ alkylaryl sulfates, C₁₋₂₂ alkyl or C₇₋₂₅ alkylaryl phosphates, substituted silicates, and mixtures thereof. A specific surfactant is a C₆₋₁₆, specifically a C₈₋₁₂ alkyl sulfonate. In the practice, any of the above-described impact modifiers may be used providing it is free of the alkali metal salts of fatty acids, alkali metal carbonates and other basic materials.

A specific impact modifier of this type is a methyl methacrylate-butadiene-styrene (MBS) impact modifier wherein the butadiene substrate is prepared using above-described sulfonates, sulfates, or phosphates as surfactants. Other examples of elastomer-modified graft copolymers besides ABS and MBS include but are not limited to acrylonitrile-styrene-butyl acrylate (ASA), methyl methacrylate-acrylonitrile-butadiene-styrene (MABS), and acrylonitrile-ethylene-propylene-diene-styrene (AES). When present, impact modifiers can be present in the thermosetting composition in amounts of 0.1 to 30 percent by weight, based on the total weight of the carboxylic acid end-capped oligomer, crosslinking compound, and any added co-resin.

The thermosetting composition may include fillers or reinforcing agents. The fillers and reinforcing agents may desirably be in the form of nanoparticles, i.e., particles with a median particle size (D₅₀) smaller than 100 nm as determined using light scattering methods. Where used, suitable fillers or reinforcing agents include, for example, silicates and silica powders such as aluminum silicate (mullite), synthetic calcium silicate, zirconium silicate, fused silica, crystalline silica graphite, natural silica sand, or the like; boron powders such as boron-nitride powder, boron-silicate powders, or the like; oxides such as TiO₂, aluminum oxide, magnesium oxide, or the like; calcium sulfate (as its anhydride, dihydrate or trihydrate); calcium carbonates such as chalk, limestone, marble, synthetic precipitated calcium carbonates, or the like; talc, including fibrous, modular, needle shaped, lamellar talc, or the like; clays such as montmorillonite and double hydroxide layer clays; wollastonite; surface-treated wollastonite; glass spheres such as hollow and solid glass spheres, silicate spheres, cenospheres, aluminosilicate (armospheres), or the like; kaolin, including hard kaolin, soft kaolin, calcined kaolin, kaolin comprising various coatings known in the art to facilitate compatibility with the polymeric matrix resin, or the like; single crystal fibers or "whiskers" such as silicon carbide, alumina, boron carbide, iron, nickel, copper, or the like; fibers (including continuous and chopped fibers) such as carbon fibers, glass fibers, such as E, A, C, ECR, R, S, D, or NE glasses , or the like; sulfides such as molybdenum sulfide, zinc sulfide or the like; barium compounds such as barium titanate, barium ferrite, barium sulfate, heavy spar, or the like; metals and metal oxides such as particulate or fibrous aluminum, bronze, zinc, copper and nickel or the like; flaked fillers such as glass flakes, flaked silicon carbide, aluminum diboride, aluminium flakes, steel flakes or the like; fibrous fillers, for example short inorganic fibers such as those derived from blends comprising at least one of aluminum silicates, aluminum oxides, magnesium oxides, and calcium sulfate hemihydrate or the like; natural fillers and reinforcements, such as wood flour obtained by pulverizing wood, fibrous products such as cellulose, cotton, sisal, jute, starch, cork flour, lignin, ground nut shells, corn, rice grain husks or the like; organic fillers such as polytetrafluoroethylene; reinforcing organic fibrous fillers formed from organic polymers capable of forming fibers such as poly(ether ketone), polyimide, polybenzoxazole, poly(phenylene sulfide), polyesters, polyethylene, aromatic polyamides, aromatic polyimides, polyetherimides, polytetrafluoroethylene, acrylic resins, poly(vinyl alcohol) or the like; as well as additional fillers and reinforcing agents such as mica, clay, feldspar, flue dust, fillite, quartz, quartzite, perlite, tripoli, diatomaceous earth, carbon black, or the like, or combinations comprising at least one of the foregoing fillers or reinforcing agents.

The fillers and reinforcing agents may be coated with a layer of metallic material to facilitate conductivity, or surface treated with silanes to improve adhesion and dispersion with the polymeric matrix resin. In addition, the reinforcing fillers may be provided in the form of monofilament or multifilament fibers and may be used either alone or in combination with other types of fiber, through, for example, co-weaving or core/sheath, side-by-side, orange-type or matrix and fibril constructions, or by other methods known to one skilled in the art of fiber manufacture. Suitable cowoven structures include, for example, glass fiber-carbon fiber, carbon fiber-aromatic polyimide (aramid) fiber, and aromatic polyimide fiberglass fiber or the like. Fibrous fillers may be supplied in the form of, for example, rovings, woven fibrous reinforcements, such as 0-90 degree fabrics or the like; non-woven fibrous reinforcements such as continuous strand mat, chopped strand mat, tissues, papers and felts or the like; or three-dimensional reinforcements such as braids. Fillers can be used in amounts of 0 to 90 percent by weight, based on the total weight of the carboxylic acid end-capped oligomer, crosslinking compound, and any added co-resin.

The thermosetting composition may comprise a colorant such as a pigment and/or dye additive. Suitable pigments include for example, inorganic pigments such as metal oxides and mixed metal oxides such as zinc oxide, titanium dioxides, iron oxides or the like; sulfides such as zinc sulfides, or the like; aluminates; sodium sulfo-silicates, sulfates, chromates, or the like; carbon blacks; zinc ferrites; ultramarine blue; Pigment Brown 24; Pigment Red 101; Pigment Yellow 119; organic pigments such as azos, diazos, quinacridones, perylenes, naphthalene tetracarboxylic acids, flavanthrones, isoindolinones, tetrachloroisoindolinones, anthraquinones, anthanthrones, dioxazines, phthalocyanines, and azo lakes; Pigment Blue 60, Pigment Red 122, Pigment Red 149, Pigment Red 177, Pigment Red 179, Pigment Red 202, Pigment Violet 29, Pigment Blue 15, Pigment Blue 15:4, Pigment Blue 28, Pigment Green 7, Pigment Yellow 147 and Pigment Yellow 150, or combinations comprising at least one of the foregoing pigments. Pigments can be used in amounts of 0.01 to 10 percent by weight, based on the total weight of carboxylic acid end-capped oligomer, crosslinking compound, and any added co-resin.

Suitable dyes can be organic materials and include, for example, coumarin dyes such as coumarin 460 (blue), coumarin 6 (green), nile red or the like; lanthanide complexes; hydrocarbon and substituted hydrocarbon dyes; polycyclic aromatic hydrocarbon dyes; scintillation dyes such as oxazole or oxadiazole dyes; aryl- or heteroaryl-substituted poly (C₂₋₈) olefin dyes; carbocyanine dyes; indanthrone dyes; phthalocyanine dyes; oxazine dyes; carbostyryl dyes; napthalenetetracarboxylic acid dyes; porphyrin dyes; bis(styryl)biphenyl dyes; acridine dyes; anthraquinone dyes; cyanine dyes; methine dyes; arylmethane dyes; azo dyes; indigoid dyes, thioindigoid dyes, diazonium dyes; nitro dyes; quinone imine dyes; aminoketone dyes; tetrazolium dyes; thiazole dyes; perylene dyes, perinone dyes; bis-benzoxazolylthiophene (BBOT); triarylmethane dyes; xanthene dyes; thioxanthene dyes; naphthalimide dyes; lactone dyes; fluorophores such as anti- stokes shift dyes which absorb in the near infrared wavelength and emit in the visible wavelength, or the like; luminescent dyes such as 7-amino-4-methylcoumarin; 3-(2'-benzothiazolyl)-7-diethylaminocoumarin; 2-(4-biphenylyl)-5-(4-t-butylphenyl)-1,3,4-oxadiazole; 2,5-bis-(4-biphenylyl)-oxazole; 2,2'-dimethyl-p-quaterphenyl; 2,2-dimethyl-p-terphenyl; 3,5,3"",5""-tetra-t-butyl-p-quinquephenyl; 2,5-diphenylfuran; 2,5-diphenyloxazole; 4,4'-diphenylstilbene; 4-dicyanomethylene-2-methyl-6-(p-dimethylaminostyryl)-4H-pyran; 1,1'-diethyl-2,2'-carbocyanine iodide; 3,3'-diethyl-4,4',5,5'-dibenzothiatricarbocyanine iodide; 7-dimethylamino-1-methyl-4-methoxy-8-azaquinolone-2; 7-dimethylamino-4-methylquinolone-2; 2-(4-(4-dimethylaminophenyl)-1,3-butadienyl)-3-ethylbenzothiazolium perchlorate; 3-diethylamino-7-diethyliminophenoxazonium perchlorate; 2-(1-naphthyl)-5-phenyloxazole; 2,2'-p-phenylen-bis(5-phenyloxazole); rhodamine 700; rhodamine 800; pyrene; chrysene; rubrene; coronene, or the like, or combinations comprising at least one of the foregoing dyes. Dyes can be used in amounts of 0.01 to 10 percent by weight, based on the total weight of carboxylic acid end-capped oligomer, crosslinking compound, and any added co-resin.

The thermosetting composition may further comprise an antioxidant. Suitable antioxidant additives include, for example, organophosphites such as tris(nonyl phenyl)phosphite, tris(2,4-di-t-butylphenyl)phosphite, bis(2,4-di-t-butylphenyl)pentaerythritol diphosphite, distearyl pentaerythritol diphosphite or the like; alkylated monophenols or polyphenols; alkylated reaction products of polyphenols with dienes, such as tetrakis[methylene(3,5-di-tert-butyl-4-hydroxyhydrocinnamate)] methane, or the like; butylated reaction products of paracresol or dicyclopentadiene; alkylated hydroquinones; hydroxylated thiodiphenyl ethers; alkylidene-bisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds such as distearylthiopropionate, dilaurylthiopropionate, ditridecylthiodipropionate, octadecyl-3-(3,5-di-tert-butyl-4-hydroxyphenyl)propionate, pentaerythrityl-tetrakis[3-(3,5-di-tert-butyl-4-hydroxyphenyl)propionate or the like; amides of beta-(3,5-di-tert-butyl-4-hydroxyphenyl)-propionic acid or the like, or combinations comprising at least one of the foregoing antioxidants. Antioxidants can be used in amounts of 0.0001 to 1 percent by weight, based on the total weight of carboxylic acid end-capped oligomer, crosslinking compound, and any added co-resin.

Suitable heat stabilizer additives include, for example, organophosphites such as triphenyl phosphite, tris-(2,6-dimethylphenyl)phosphite, tris-(mixed mono-and dinonylphenyl)phosphite or the like; phosphonates such as dimethylbenzene phosphonate or the like, phosphates such as trimethyl phosphate, or the like, or combinations comprising at least one of the foregoing heat stabilizers. Heat stabilizers can be used in amounts of 0.0001 to 1 percent by weight, based on the total weight of carboxylic acid end-capped oligomer, crosslinking compound, and any added co-resin.

Light stabilizers and/or ultraviolet light (UV) absorbing additives may also be used. Suitable light stabilizer additives include, for example, benzotriazoles such as 2-(2-hydroxy-5-methylphenyl)benzotriazole, 2-(2-hydroxy-5-tert-octylphenyl)-benzotriazole and 2-hydroxy-4-n-octoxy benzophenone, or the like, or combinations comprising at least one of the foregoing light stabilizers. Light stabilizers can be used in amounts of 0.0001 to 1 percent by weight, based on the total weight of carboxylic acid end-capped oligomer, crosslinking compound, and any added co-resin.

Suitable UV absorbing additives include for example, hydroxybenzophenones; hydroxybenzotriazoles; hydroxybenzotriazines; cyanoacrylates; oxanilides; benzoxazinones; 2- (2H-benzotriazol-2-yl)-4-(1,1,3,3-tetramethylbutyl)-phenol (CYASORB^{®} 5411); 2-hydroxy-4-n-octyloxybenzophenone (CYASORB^{®} 531); 2-[4,6-bis(2,4-dimethylphenyl)-1,3,5-triazin-2-yl]- 5-(octyloxy)-phenol (CYASORB^{®} 1164); 2,2'-(1,4- phenylene)bis(4H-3,1-benzoxazin-4-one) (CYASORB^{®} UV- 3638); 1,3-bis[(2-cyano-3,3-diphenylacryloyl)oxyl-2,2-bis[[(2-eyano-3, 3-diphenylacryloyl)oxy]methyl]propane (UVINUL^{®} 3030); 2,2'-(1,4-phenylene) bis(4H-3,1-benzoxazin-4-one); 1,3-bis[(2-cyano-3,3-diphenylacryloyl)oxy]-2,2-bis[[(2-cyano-3,3-diphenylacryloyl)oxy]methyl] propane; nano-size inorganic materials such as titanium oxide, cerium oxide, and zinc oxide, all with particle size less than or equal to 100 nanometers; or the like, or combinations comprising at least one of the foregoing UV absorbers. UV absorbers can be used in amounts of 0.0001 to 1 percent by weight, based on the total weight of carboxylic acid end-capped oligomer, crosslinking compound, and any added co-resin.

Plasticizers, lubricants, and/or mold release agents additives may also be used. There is considerable overlap among these types of materials, which include, for example, phthalic acid esters such as dioctyl-4,5-epoxy-hexahydrophthalate; tris-(octoxycarbonylethyl)isocyanurate; tristearin; di- or polyfunctional aromatic phosphates such as resorcinol tetraphenyl diphosphate (RDP), the bis(diphenyl) phosphate of hydroquinone and the bis(diphenyl) phosphate of bisphenol-A; poly-alpha-olefins; epoxidized soybean oil; silicones, including silicone oils; esters, for example, fatty acid esters such as alkyl stearyl esters, e.g., methyl stearate; stearyl stearate, pentaerythritol tetrastearate, and the like; mixtures of methyl stearate and hydrophilic and hydrophobic nonionic surfactants comprising polyethylene glycol polymers, polypropylene glycol polymers, and copolymers thereof, e.g., methyl stearate and polyethylene-polypropylene glycol copolymers in a suitable solvent; waxes such as beeswax, montan wax, paraffin wax or the like. Such materials can be used in amounts of 0.001 to 1 percent by weight, specifically 0.01 to 0.75 percent by weight, more specifically 0.1 to 0.5 percent by weight, based on the total weight of carboxylic acid end-capped oligomer, crosslinking compound, and any added co-resin.

The term "antistatic agent" refers to monomeric, oligomeric, or polymeric materials that can be processed into polymer resins and/or sprayed onto materials or articles to improve conductive properties and overall physical performance. Examples of monomeric antistatic agents include glycerol monostearate, glycerol distearate, glycerol tristearate, ethoxylated amines, primary, secondary and tertiary amines, ethoxylated alcohols, alkyl sulfates, alkylarylsulfates, alkylphosphates, alkylaminesulfates, alkyl sulfonate salts such as sodium stearyl sulfonate, sodium dodecylbenzenesulfonate or the like, quaternary ammonium salts, quaternary ammonium resins, imidazoline derivatives, sorbitan esters, ethanolamides, betaines, or the like, or combinations comprising at least one of the foregoing monomeric antistatic agents.

Exemplary polymeric antistatic agents include certain polyesteramides polyether-polyamide (polyetheramide) block copolymers, polyetheresteramide block copolymers, polyetheresters, or polyurethanes, each containing polyalkylene glycol moieties polyalkylene oxide units such as polyethylene glycol, polypropylene glycol, polytetramethylene glycol, and the like. Such polymeric antistatic agents are commercially available, for example Pelestat^{®} 6321 (Sanyo) or Pebax^{®} MH1657 (Atofina), Irgastat^{®} P18 and P22 (Ciba-Geigy). Other polymeric materials that may be used as antistatic agents are inherently conducting polymers such as polyaniline (commercially available as PANIPOL^{®}EB from Panipol), polypyrrole and polythiophene (commercially available from Bayer), which retain some of their intrinsic conductivity after melt processing at elevated temperatures. In one embodiment, carbon fibers, carbon nanofibers, carbon nanotubes, carbon black, or any combination of the foregoing may be used in a polymeric resin containing chemical antistatic agents to render the composition electrostatically dissipative. Antistatic agents can be used in amounts of 0.0001 to 5 percent by weight, based on the total weight of carboxylic acid end-capped oligomer, crosslinking compound, and any added co-resin.

Suitable flame retardant that may be added may be organic compounds that include phosphorus, bromine, and/or chlorine. Non-brominated and non-chlorinated phosphorus-containing flame retardants may be preferred in certain applications for regulatory reasons, for example organic phosphates and organic compounds containing phosphorus-nitrogen bonds.

One type of exemplary organic phosphate is an aromatic phosphate of the formula (GO)₃P=O, wherein each G is independently an alkyl, cycloalkyl, aryl, alkylaryl, or arylalkyl group, provided that at least one G is an aromatic group. Two of the G groups may be joined together to provide a cyclic group, for example, diphenyl pentaerythritol diphosphate. Other suitable aromatic phosphates may be, for example, phenyl bis(dodecyl) phosphate, phenyl bis(neopentyl) phosphate, phenyl bis(3,5,5'-trimethylhexyl) phosphate, ethyl diphenyl phosphate, 2-ethylhexyl di(p-tolyl) phosphate, bis(2-ethylhexyl) p-tolyl phosphate, tritolyl phosphate, bis(2-ethylhexyl) phenyl phosphate, tri(nonylphenyl) phosphate, bis(dodecyl) p-tolyl phosphate, dibutyl phenyl phosphate, 2-chloroethyl diphenyl phosphate, p-tolyl bis(2,5,5'-trimethylhexyl) phosphate, 2-ethylhexyl diphenyl phosphate, or the like. A specific aromatic phosphate is one in which each G is aromatic, for example, triphenyl phosphate, tricresyl phosphate, isopropylated triphenyl phosphate, and the like.

Di- or polyfunctional aromatic phosphorus-containing compounds are also useful, for example, compounds of the formulas below: 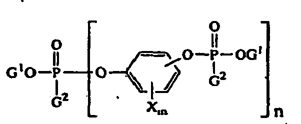 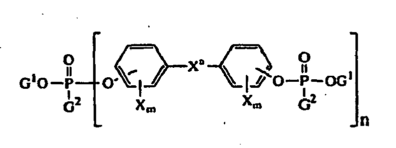 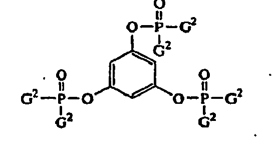 wherein each G¹ is independently a hydrocarbon having 1 to 30 carbon atoms; each G² is independently a hydrocarbon or hydrocarbonoxy having 1 to 30 carbon atoms; each X^{a} is independently a hydrocarbon having 1 to 30 carbon atoms; each X is independently a bromine or chlorine; m is 0 to 4, and n is 1 to 30. Examples of suitable di- or polyfunctional aromatic phosphorus-containing compounds include resorcinol tetraphenyl diphosphate (RDP), the bis(diphenyl) phosphate of hydroquinone and the bis(diphenyl) phosphate of bisphenol-A, respectively, their oligomeric and polymeric counterparts, and the like.

Exemplary suitable flame retardant compounds containing phosphorus-nitrogen bonds include phosphonitrilic chloride, phosphorus ester amides, phosphoric acid amides, phosphonic acid amides, phosphinic acid amides, tris(aziridinyl) phosphine oxide. When present, phosphorus-containing flame retardants can be present in amounts of 0.1 to 10 percent by weight, based on the total weight of carboxylic acid end-capped oligomer, crosslinking compound, and any added co-resin.

Halogenated materials may also be used as flame retardants, for example halogenated compounds and resins of formula (18): 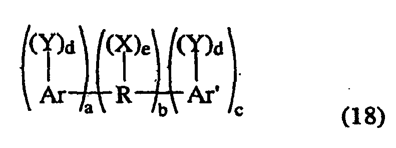 wherein R is an alkylene, alkylidene or cycloaliphatic linkage, e.g., methylene, ethylene, propylene, isopropylene, isopropylidene, butylene, isobutylene, amylene, cyclohexylene, cyclopentylidene, or the like; or an oxygen ether, carbonyl, amine, or a sulfur containing linkage, e.g., sulfide, sulfoxide, sulfone, or the like. R can also consist of two or more alkylene or alkylidene linkages connected by such groups as aromatic, amino, ether, carbonyl, sulfide, sulfoxide, sulfone, or the like.

Ar and Ar' in formula (18) are each independently mono- or polycarbocyclic aromatic groups such as phenylene, biphenylene, terphenylene, naphthylene, or the like.

Y is an organic, inorganic, or organometallic radical, for example: halogen, e.g., chlorine, bromine, iodine, fluorine; ether groups of the general formula OE, wherein E is a monovalent hydrocarbon radical similar to X; monovalent hydrocarbon groups of the type represented by R; or other substituents, e.g., nitro, cyano, and the like, said substituents being essentially inert provided that there is at least one and preferably two halogen atoms per aryl nucleus.

When present, each X is independently a monovalent hydrocarbon group, for example an alkyl group such as methyl, ethyl, propyl, isopropyl, butyl, decyl, or the like; an aryl groups such as phenyl, naphthyl, biphenyl, xylyl, tolyl, or the like; and arylalkyl group such as benzyl, ethylphenyl, or the like; a cycloaliphatic group such as cyclopentyl, cyclohexyl, or the like. The monovalent hydrocarbon group may itself contain inert substituents.

Each d is independently 1 to a maximum equivalent to the number of replaceable hydrogens substituted on the aromatic rings comprising Ar or Ar'. Each e is independently 0 to a maximum equivalent to the number of replaceable hydrogens on R. Each a, b, and c is independently a whole number, including 0. When b is not 0, neither a nor c may be 0. Otherwise either a or c, but not both, may be 0. Where b is 0, the aromatic groups are joined by a direct carbon-carbon bond.

The hydroxyl and Y substituents on the aromatic groups, Ar and Ar', can be varied in the ortho, meta or para positions on the aromatic rings and the groups can be in any possible geometric relationship with respect to one another.

Included within the scope of the above formula are bisphenols of which the following are representative: 2,2-bis-(3,5-dichlorophenyl)-propane; bis-(2-chlorophenyl)-methane; bis(2,6-dibromophenyl)-methane; 1,1-bis-(4-iodophenyl)-ethane; 1,2-bis-(2,6-dichlorophenyl)-ethane; 1,1-bis-(2-chloro-4-iodophenyl)ethane; 1,1-bis-(2-chloro-4-methylphenyl)-ethane; 1,1-bis-(3,5-dichlorophenyl)-ethane; 2,2-bis-(3-phenyl-4-bromophenyl)-ethane; 2,6-bis-(4,6-dichloronaphthyl)-propane; 2,2-bis-(2,6-dichlorophenyl)-pentane; 2,2-bis-(3,5-dibromophenyl)-hexane; bis-(4-chlorophenyl)-phenyl-methane; bis-(3,5-dichlorophenyl)-cyclohexylmethane; bis-(3-nitro-4-bromophenyl)-methane; bis-(4-hydroxy-2,6-dichloro-3-methoxyphenyl)-methane; and 2,2-bis-(3,5-dichloro-4-hydroxyphenyl)-propane 2,2 bis-(3-bromo-4-hydroxyphenyl)-propane. Also included within the above structural formula are: 1,3-dichlorobenzene, 1,4-dibromobenzene, 1,3-dichloro-4-hydroxybenzene, and biphenyls such as 2,2'-dichlorobiphenyl, polybrominated 1,4-diphenoxybenzene, 2,4'-dibromobiphenyl, and 2,4'-dichlorobiphenyl as well as decabromo diphenyl oxide, and the like.

Also useful are oligomeric and polymeric halogenated aromatic compounds, such as a copolycarbonate of bisphenol A and tetrabromobisphenol A and a carbonate precursor, e.g., phosgene. Metal synergists, e.g., antimony oxide, may also be used with the flame retardant. When present, halogen containing flame retardants can be present in amounts of 0.1 to 10 percent by weight, based on the total weight of carboxylic acid end-capped oligomer, crosslinking compound, and any added co-resin. Inorganic flame retardants may also be used, for example salts of C₂₋₁₆ alkyl sulfonate salts such as potassium perfluorobutane sulfonate (Rimar salt), potassium perfluoroctane sulfonate, tetraethylammonium perfluorohexane sulfonate, and potassium diphenylsulfone sulfonate, and the like; salts formed by reacting for example an alkali metal or alkaline earth metal (for example lithium, sodium, potassium, magnesium, calcium and barium salts) and an inorganic acid complex salt, for example, an oxo-anion, such as alkali metal and alkaline-earth metal salts of carbonic acid, such as Na₂CO₃, K₂CO₃, MgCO₃, CaCO₃, and BaCO₃ or fluoro-anion complexes such as Li₃AlF₆, BaSiF₆, KBF₄, K₃AlF₆, KAlF₄, K₂SiF_{6,} and/or Na₃AlF₆ or the like; and mineral flame retardants such as hydrotalcites and the like. When present, inorganic flame retardant salts can be present in amounts of 0.1 to 5 percent by weight, based on the total weight of carboxylic acid end-capped oligomer, crosslinking compound, and any added co-resin.

Further additives that are contemplated for use with the above compositions include: degassing agents including silicones, and aromatic hydrocarbons such as benzoin; antifoam agents, including silicones such as, for example, 5304 Silicone from Union Carbide Corp; rheology modifiers including starch, modified starch, poly(alkylene glycols) such as ethylene glycol, and polyvinyl alcohol; surfactants including ionic surfactants, non-ionic surfactants, silicone surfactants, and non-silicone based surfactants including polyethylene glycols and polyethylene glycol ethers, fluorinated surfactants, and the like; flow modifiers such for example high Mw acrylates; dispersing aids; wetting agents; biocides; corrosion inhibitors; drying agents; flatting agents; and adhesion promoters such as, for example, vinyl silanes, epoxy silanes, vinyl titanates, epoxy titanates, and the like; and a combination comprising at least one of the foregoing additives. Where desired, such further additives may be used in amounts of 0.001 to 10 wt%, based on the total weight of carboxylic acid end-capped oligomer, crosslinking compound, and any added co-resin.

The thermosetting composition may be manufactured by methods generally available in the art, for example, in one embodiment, in one manner of proceeding, powdered polyester-polycarbonate polymer, poly(alkylene terephthalate) polymer, any added polycarbonate, and other optional components including stabilizer packages (e.g., antioxidants, gamma stabilizers, heat stabilizers, ultraviolet light stabilizers, and the like) and/or other additives are thoroughly blended, in a HENSCHEL-Mixer^{®} high speed mixer. Other low shear processes including but not limited to hand mixing may also accomplish this blending. Where feasible, non-thermally reactive components may be combined first by feeding into the throat and/r sidestuffer of an extruder via a hopper. Where desired, the carboxylic acid end-capped oligomer, and any desired non-thermally reacting co-resins and/or additives may also be compounded into a masterbatch and combined with a desired resin and fed into the extruder. The extruder, where used, is generally operated at a temperature higher than that necessary to cause the composition to flow. The extrudate is immediately quenched in a water batch and pelletized. The pellets, so prepared, are desirably powdered for subsequent mixing with other desired components and/or additives.

The carboxylic acid end-capped polyarylate-soft block oligomers are suitable for use in powder coatings. Coating compositions may be prepared by combining the carboxylic acid end-capped oligomers, crosslinking compounds, any co-resins, and other additives using extruders or kneaders at temperatures of 30 to 130°C. The solid obtained can then be ground or pulverized to a powder, wherein coarse grain fractions having a grain size greater than 0.1 mm may be removed by screening. The particulate coating compositions may be applied to a substrate to be coated using any of the conventional powder application processes, such as electrostatic powder spraying, triboelectric application or fluidized bed coating. The coating is then initially fused by heating (e.g., using an infrared light source) to form a film that may be clear or opaque where a pigment or other color-producing agent has been included in the coating composition.. Fusing the particles to the desired extent may be accomplished at temperatures of greater than or equal to 50°C, specifically greater than or equal to 70°C, and more specifically greater than or equal to 80°C. The fused coating may then be cured either by heating, at a temperature of 80 to 220°C, for a time of 3 to 60 minutes. In an embodiment, curing is done at temperatures of 80 to 150°C.

Powder coatings made with the crosslinking compounds of the present invention are suitable for coating substrates such as wood, metal, plastics, mineral substances and/or pre-coated substrates made therefrom, or substrates made from or containing any combination of these materials. Articles comprising a powder coating comprising the carboxylic acid end-capped polyarylate-soft block oligomers are also provided. Examples of coated articles which can be made therewith include automotive, truck, military vehicle, and motorcycle exterior and interior components, including panels, quarter panels, rocker panels, trim, fenders, doors, decklids, trunklids, hoods, bonnets, roofs, bumpers, fascia, grilles, mirror housings, pillar appliques, cladding, body side moldings, wheel covers, hubcaps, door handles, spoilers, window frames, headlamp bezels, headlamps, tail lamps, tail lamp housings, tail lamp bezels, license plate enclosures, roof racks, and running boards; enclosures, housings, panels, and parts for outdoor vehicles and devices; enclosures for electrical and telecommunication devices; outdoor furniture; aircraft components; boats and marine equipment, including trim, enclosures, and housings; outboard motor housings; depth finder housings, personal water-craft; jet-skis; pools; spas; hot-tubs; steps; step coverings; building and construction applications such as glazing, roofs, windows, floors, decorative window furnishings or treatments; aluminum extrusions and facades; treated glass covers for pictures, paintings, posters, and like display items; wall panels, and doors; protected graphics; outdoor and indoor signs; enclosures, housings, panels, and parts for automatic teller machines (ATM); enclosures, housings, panels, and parts for lawn and garden tractors, lawn mowers, and tools, including lawn and garden tools; window and door trim; sports equipment and toys; enclosures, housings, panels, and parts for snowmobiles; recreational vehicle panels and components; playground equipment; articles made from plastic-wood combinations; golf course markers; utility pit covers; computer housings; desk-top computer housings; portable computer housings; lap-top computer housings; palm-held computer housings; monitor housings; printer housings; keyboards; FAX machine housings; copier housings; telephone housings; mobile phone housings; radio sender housings; radio receiver housings; light fixtures; lighting appliances; network interface device housings; transformer housings; air conditioner housings; cladding or seating for public transportation; cladding or seating for trains, subways, or buses; meter housings; antenna housings; cladding for satellite dishes; coated helmets and personal protective equipment; coated synthetic or natural textiles; coated photographic film and photographic prints; coated painted articles: coated dyed articled; coated fluorescent articles; coated foam articles; and like applications. The invention further contemplates additional fabrication operations on said articles, such as, but not limited to, molding, in-mold decoration, baking in a paint oven, lamination, and/or thermoforming. The thermosetting compositions discussed herein, and comprising the carboxylic end-capped polyarylate-soft block oligomers may also be used to form thermosetting adhesives, and thermosetting composites.

The carboxylic acid end-capped oligomers are further illustrated by the following non-limiting examples.

Polymer molecular weight was determined by gel permeation chromatography (GPC) using a crosslinked styrene-divinylbenzene gel column, a sample concentration of
1 milligram per milliliter, and was calibrated using polycarbanate standards. The amount of COOH end groups and the DP of the ITR and of the soft block have been determined by COOH titration and by ¹H-NMR analysis using CDCl₃ and/or DMSO-d₆ as the sample solvent. The soft block length (degree of polymerization, also referred to as DP) can be measured using proton nuclear magnetic resonance spectrometry (¹H NMR), by determining the fraction of the integrate signal corresponding to the methylene protons in the esterified -O-CH₂- groups (at a chemical shift of δ=4.8 ppm using ¹H NMR) with the signal of all the aliphatic groups. End group determination by titration was determined using a CH₂Cl₂ solution of the oligomers titrated with a solution of tetrabutyl ammonium hydroxide in methanol (titrating agent), where the results are expressed in milliequivalents of titrable protons per kilogram of titrated sample (meq/Kg).

Carboxylic acid end-capped polyarylate-soft block oligomers for the examples and comparative examples were prepared using the components shown in Table I.

**Table 1.**

| | | |
|---|---|---|
| TPA | Terephthalic acid | Aldrich Chemical Co. |
| IPA | Isophthalic acid | Aldrich Chemical Co. |
| RES | Resorcinol | Aldrich Chemical Co. |
| PEG | Polyethylene glycol (pEG 600), Mw = 1,240 | Aldrich Chemical Co. |
| DPC | Diphenyl carbonate | Aldrich Chermical Co. |
| NaH₂PO₄ | Sodium phosphate cocatalyst | Aldrich Chemical Co. |
| TBT | Tetrabutyl titanate | Aldrich Chemical Co. |
| C94 | C94, titanium-silica based catalyst | Acordis Industrial Fibers |
| NaOH | Sodium hydroxide | Aldrich Chemical Co. |

The carboxylic acid end-capped polyarylate-soft block oligomers, were prepared using the process described in the following exemplary method.

In an exemplary method, a round bottom wide-neck reactor (250 ml volume) was charged with 12.46 g of terephthalic acid (TPA), 12.46 g of isophthalic acid (IPA), 44.07 g of diphenyl carbonate (DPC), 9.63 g of resorcinol (RES), 7.50 g of PEG 600 (PEG), wherein the molar ratio of TPA/IPA/DPC/RES/PEG is 0.75/0.75/0.205/0.0875/0.0125. The reactor was then charged with 0.02 g of NaOH (350 ppm) as catalyst, and closed with a three-neck flat flange lid equipped with a mechanical stirrer and a torque meter. The lid was heated at a temperature of 170°C with a heating band under an argon flow (1.0 liters perminute). The system was then connected to a liquid nitrogen cooled condenser and immersed in an oil both maintained at a temperature of 285°C. The reaction was equilibrated to this temperature under atmospheric pressure and with stirring (50 rpm). Phenol formed as a by-product of the reaction distilled from the reaction and was recovered in the condenser. Evolution of CO₂ began after 15 min. of heating, and gas evolution had ceased and evidence of solids had disappeared after 130 min, as evidenced by a clear appearance of the reaction. Heating was continued for an additional 180 min. after cessation of gas evolution. At this time, vacuum was slowly and carefully applied to the reactor to decrease the internal pressure from atmospheric pressure (appx. 1.000 mbar) to 60 mbar in 10 min. After 30 minutes from reaching a pressure of 60 mbar, the internal pressure was further decreased to 0.1 mbar. The reaction was stopped after 15 min at this pressure, by repressurizing to atmospheric temperature and removing the heat. The resulting oligomer was transferred to a cooling tray while still molted, and allowed to cool.

Examples 1-11 were prepared using the general method above have been conducted in order to find the proper catalyst, catalyst level, reaction temperature profile and excess of acids and of diphenyl carbonate (Table 2).

**Table 2.**

| Sample | Catalyst | Catalyst level (ppm) | Reaction Temp | Clearing Time (min.) | Time after Clear (min.) | Time at full Vacuum (min) | Molar ratio of: (TPA+IPA)/ (RES+PEG) | Molar ratio of: DPC/ (RES+PEG) | Molar ratio of: PEG/ (RES+PEG) | Mw | Carboxylic end-groups (meq/kg) | % COOH end group (per mole of end group) |
|---|---|---|---|---|---|---|---|---|---|---|---|---|
| Ex. 1. | TBT+ NaH₂PO₄ | 100ppm | 275°C | 45 | 180 | 30 | 1.3 | 1.89 | 0.125 | 3900 | 703 | 66.1% |
| Ex. 2 | TBT +NaH₂PO₄ | 50ppm | 280°C | 45 | 180 | 15 | 1.4 | 1.89 | 0.125 | * | 371 | 82.4% |
| Ex. 3 | C94+NaH₂PO₄ | 100ppm. | 270°C | 45 | 180 | 15 | 1.4 | 1.89 | 0.125 | 89,00 | 4,12 | 83.3% |
| Ex. 4 | C94 | 100ppm | 270°C | 75 | 180 | 15 | 1.45 | 1.95 | 0.125 | 6800 | 852 | 74.4% |
| Ex. 5 | C94 | 100ppm | 270°C | 75 | 180 | 15 | 1.5 | 2 | 0,125 | 5100 | 1166 | 78.6% |
| Ex. 6 | C94 | 74ppm | 270°C | 120 | 180 | 15 | 1.5 | 2.05 | 0.125 | 4700 | 1190 | 70.7% |
| Ex. 7 | NaOH | 350ppm | 280°C | 120 | 180 | 20 | 1.5 | 2.05 | 0.125. | 5700 | 1098 | 81.9% |
| Ex. 8 | --- | --- | 290°C | 180 | 180 | 20 | 1.5 | 2.05 | 0.125 | * | 419 | 82.3% |
| Ex. 9 | NaOH | 350ppm | 280°C | 135 | 150 | 15 | 1.5 | 2.05 | 0.125 | * | 406 | 92.5% |
| Ex. 10 | NaOH | 350ppm | 280°C | 100 | 180 | 15 | 1.5 | 2.05 | 0.625 | 9300 | 856 | 67.8% |
| Ex. 11 | NaOH | 350ppm | 280°C | 165 | 180 | 20 | 1.5 | 2.05 | 0.0625 | * | 935 | 72.5% |

| | | | | | | | | | | | | |
|---|---|---|---|---|---|---|---|---|---|---|---|---|
| C94 is a titanium-silica based catalyst for PET synthesis commercialized by Acordis Industrial Fibres * Not detected due to the presence of artifacts in the GPC chromatogram. | | | | | | | | | | | | |

In all the experiments the final DP of the soft block was between 9 and 11 indicating only a slight degradation of the soft block, which had an initial (before reaction) DP of 13.6. Dissolution (in chloroform), precipitation (in methanol) of the reaction products, and analysis by ¹H NMR showed that the soft block was covalently bonded to the ITR chain.

The ¹H-NMR spectra (Figure 1) does not show the presence of side product formation, and further shows no free iso/terephthalic acids in the reaction product. The ratio between OH and COOH end groups was determined by comparing the singlet at. δ =8.8 ppm (1 proton corresponding to isophthalic end groups plus the proton signal of ¹H of isophthalic aliphatic ester) with that of the signal at δ = 6.8 ppm corresponding to resorcinol end groups (3 protons). Phenyl ester could not be directly detected.

In Examples 2, 8, 9, and 11 it was not possible to determine the Mw using GPC due to artifacts in the chromatogram.

The highest COOH content (by titration) was obtained using C94 as catalyst and using an iso-/terephthalic acid/diol ratio of 1.5 (Example 6). However, the best ratio between COOH and OH end groups was obtained using sodium hydroxide as catalyst due to the higher Mw obtained (Examples 7-9). The use of basic catalyst gives also rise to less discoloration of the final material and slightly yellow transparent polymers have been obtained. The use of TBT (Examples 1-2) resulted in more strongly colored polymers even after addition of a catalyst quencher such as phosphorous acid. The best overall conditions are found in Example 9.

The glass transition temperature of COOH terminated ITR has been measured by differential scanning calorimetry (DSC) analysis at 20°C/min. The data is summarized in Table 3, below.

**Table 3:**

| Run | Soft Block | Tg (°C) | ΔCp (J/g) |
|---|---|---|---|
| Ex 1 | PEG 600 | 28.4 | 0.398 |
| Ex 2 | PEG 600 | 34.5 | 0.362 |
| Ex 3 | PEG 600 | 31.1 | 0.367 |
| CEx 1 | Polycaprolactone | 61.0 | -- |
| CEx 2 (ITR) | -- | 144.5 | 0.298 |

Example 1-3 with PEG/resorcinol ratio of 1/8 presented a Tg that is consistently lower (28.4 to 34.5°C) compared to that obtained by interfacial polymerization using polycaprolactone as soft block (Comparative Example 1, 61°C). By comparison, the Tg of ITR (Comparative Example 2) is significantly higher than the Tg of Examples 1-3 by at least 133°C. In addition, the change in heat capacity (ΔCp) is greater by up to 0.1 J/g for the oligomers containing PEG soft block (Examples 1-3), when compared to Comparative Example 2,

Compounds are described herein using standard nomenclature. A dash ("-") that is not between two letters or symbols is used to indicate a point of attachment for a subsituent. For example, CHO is attached through the carbon of the carbonyl (C=O) group. The singular forms "a," "an," and "the" include plural referents unless the context clearly dictates otherwise. The endpoints of all ranges reciting the same characteristic or component are independently combinable and inclusive of the recited endpoint. The terms "first," "second," and the like herein do not denote any order, quantity, or importance, but rather are used to distinguish one element from another.

## Claims

1. A method of preparing a carboxylic acid end-capped oligomer, comprising melt reacting:
a dicarboxylic acid
a dihydroxy compound
a hydroxy end-capped soft block compound,
a diaryl carbonate, and
a catalyst,
wherein the molar ratio of dihydroxy end-capped soft block compound to dihydroxy compound is 1:4 to 1:40, the molar ratio of dicarboxylic acid to the combined molar amounts of dihydroxy compound and hydroxy end-capped soft block compound is 1.01:1 to 2:1, and the molar ratio of diaryl carbonate to the combined molar amounts of dihydroxy compound and hydroxy end-capped soft block compound is 1.5:1 to 3:1.

2. The method of claim 1, wherein the aryl dicarboxylic acid is isophthalic acid, terephthalic acid, or a combination comprising at least one of the foregoing aryl dicarboxylic acids, and wherein the dihydroxy compound is a resorcinol.

3. The method of claim 1, wherein the hydroxy end-capped soft block compound is a dihydroxy poly(alkylene oxide), a polyimide, an end group functionalized polyolefin, a polysiloxane, or a combination comprising at least one of the foregoing.

4. The method of claim 3, wherein the poly(alkylene oxide) has the structure H-(O-C₁₋₂₀)-_{w}-OH, wherein w is 1 to 500.

5. The method of claim 1, wherein the diaryl carbonate is diphenyl carbonate, bis(4-methylphenyl) carbonate, bis(4-chlorophenyl) carbonate, bis(4-acetylphenyl)carbonate, bis(4-methoxyphenyl)carbonate, bis(methylsalicyl) carbonate, or a combination comprising one or more of these diaryl carbonates.

6. The method of claim 1, wherein the catalyst is present in an amount of 1 to 1,000 ppm, based on the total weight of the reaction composition, and wherein the catalyst is a titanium catalyst, a titanium catalyst with a co-eatalyst, or a metal hydroxide base.

7. The method of claim 1, wherein the melt reacting is at 200 to 350°C.

8. The method of claim 1, wherein reduced pressure is applied during the melt reacting, after the melt reacting, or both during and after the melt reacting, wherein the reduced pressure is less than or equal to 150 millibars (mbar), and wherein reduced pressure is maintained for 5 to 60 minutes.

9. A carboxylic acid end-capped oligomer comprising
polyarylate ester units derived from a dicarboxylic acid having a C₆-C₃₀ arylene group and a dihydroxy compound having a C₆-C₃₀ arylene group or a C₆-C₃₀ alkylene-arylene group;
a soft block derived from a hydroxy end-capped soft block compound, and carboxylic acid end groups:
wherein the carboxylic acid end-capped oligomer is prepared by melt reacting:
the dicarboxylic acid,
the dihydroxy compound,
the soft block derived from a hydroxy end-capped soft block compound,
a diaryl carbonate, and
a catalyst,
wherein the molar ratio of hydroxy end-capped soft block compound to dihydroxy compound is 1:4 to 1:40, the molar ratio of dicarboxylic acid to the combined molar amounts of dihydroxy compound and hydroxy end-capped soft block compound is 1.01:1 to 2:1, and the molar ratio of diaryl carbonate to the combined molar amounts of dihydroxy compound and hydroxy end-capped soft block compound is 1.5:1 to 3:1, and
wherein at least one end of the soft block is linked to polyarylate ester units and greater than or equal to 60 mole percent of the total number of end groups in the carboxylic acid end-capped oligomer arc carboxylic acid end groups.

10. The carboxylic acid end-capped oligomer of claim 9, wherein each end of the soft block is linked to a polyarylate ester unit.

11. The carboxylic acid end-capped oligomer of claim 10, wherein each arylate ester unit is an isophthalate-terephthalate-resorcinol ester unit, and wherein the soft block is a polyether, a polyimide, a polyolefin, a polyetherimide, a polyolefin-polyalkylene ether, a polysiloxane, or a combination comprising at least one of the foregoing soft blocks.

12. The carboxylic acid end-capped oligomer of claim 9, having a weight averaged molecular weight (Mw) of 1,000 to 40,000 as measured using gel permeation chromatography using a crosslinked styrene-divinylbenzene column, and as calibrated using polystyrene standards, wherein the carboxylic acid end-capped oligomer has a glass transition temperature of 20 to 80°C, and the number of free carboxylic acid end groups, as determined by titration using a base, are greater than or equal to 200 milliequivalents of titrable free carboxylic acid per kilogram of the oligomer (meq/Kg).

13. The carboxylic; acid end-capped oligomer of claim 9, wherein the carboxylic acid end-capped oligomer is free of amine compounds.

14. The carboxylic acid end-capped oligomer of claim 9 having the formula: 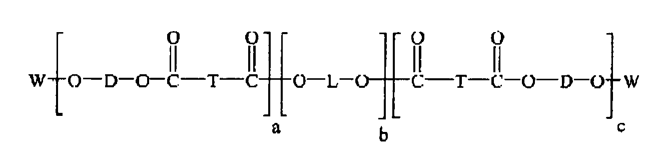 wherein each T is independently an arylene group, each D is independently an arylene group, L is a soft block, each W is independently H or a dicarboxylic acid residue having a free carboxylic acid, a and c are each independently 0 to 20, with the proviso that the sum of a+c is 4 to 40, and b is 1 to 3; and
wherein greater than or equal to 60 mole percent of the total number of end groups in the carboxylic acid end-capped oligomer are carboxylic acid end groups, and wherein the carboxylic acid end-capped oligomer is free of amine compounds.

## Patentansprüche

1. Ein Verfahren zur Herstellung eines End-abgeschnittenen Carbonsäure-Oligomers, das die Schmelzreaktion von Folgendem umfasst:
einer Dicarbonsäure,
einer Dihydroxyverbindung,
einer End-abgeschnittenen weichen Hydroxy-Blockverbindung,
eines Diarylcarbonats und
eines Katalysators,
worin das Molverhältnis von End-abgeschnittener weicher Dihydroxy-Blockverbindung zu Dihydroxyverbindung 1:4 bis 1:40 beträgt, das Molverhältnis von Dicarbonsäure zu den kombinierten Molmengen von Dihydroxyverbindung und End-abgeschnittener weicher Hydroxy-Blockverbindung 1,01:1 bis 2:1 beträgt und das Molverhältnis von Diarylcarbonat zu den kombinierten Molmengen von Dihydroxyverbindung und End-abgeschnittener weicher Hydroxy-Blockverbindung 1,5:1 bis 3:1 beträgt.

2. Das Verfahren gemäß Anspruch 1, worin die Aryl-Dicarbonsäure Isophthalsäure, Terephthalsäure oder eine Kombination ist, die mindestens eine der oben genannten Aryl-Dicarbonsäuren umfasst, und worin die Dihydroxyverbindung ein Resorcinol ist.

3. Das Verfahren gemäß Anspruch 1, worin die End-abgeschnittene weiche Hydroxy-Blockverbindung ein Dihydroxypoly(alkylenoxid), ein Polyimid, ein Endgruppenfunktionalisiertes Polyolefin, ein polysiloxan oder eine Kombination ist, die mindestens eines der oben genannten umfasst.

4. Das Verfahren gemäß Anspruch 3, worin das Poly/alkylenoxid) die Struktur H-(-O-C₁₋₂₀-)_{w}-OH hat, worin w 1 bis 500 ist.

5. Das Verfahren gemäß Anspruch 1, worin das Diarylcarbonat Diphenylcarbonat, bis(4-Methylphenyl)carbonat, bis(4-Chlorphenyl)carbonat, bis(4-Acetylphenyl)carbonat, bis(4-Methoxyphenyl)carbonat, bis(Methylsalicyl)carbonat oder eine Kombination ist, die eines oder mehrere dieser Diarylcarbonate umfasst.

6. Das Verfahren gemäß Anspruch 1, worin der Katalysator in einer Menge von 1 bis 1.000 ppm, basierend auf dem Gesamtgewicht der Reaktionszusammensetzung, anwesend ist und worin der Katalysator ein Titankatalysator, ein Titankatalysator mit einem Co-Katalysator oder eine Metallhydroxidbase ist.

7. Das Verfahren gemäß Anspruch 1, worin die Schmelzreaktion bei 200 bis 350°C stattfindet.

8. Das Verfahren gemäß Anspruch 1, worin verminderter Druck während der Schmelzreaktion, nach der Schmelzreaktion oder sowohl während als auch nach der Schmelzreaktion ausgeübt wird, worin der verminderte Druck kleiner als oder gleich 150 Millibar (mbar) ist und worin der verminderte Druck 5 bis 60 Minuten lang aufrechterhalten wird.

9. Ein End-abgeschnittenes Carbonsäure-Oligomer, das Folgendes umfasst:
Polyarylatestereinheiten, abgeleitet von einer Dicarbonsäure mit einer C₆-C₃₀-Arylengruppe und einer Dihydroxyverbindung mit einer C₆-C₃₀-Arylengruppe oder einer C₆-C₃₀-Alkylen-Arylengruppe,
einen weichen Block, abgeleitet von einer End-abgeschnittenen weichen Hydroxy-Blockverbindung, und Carbonsäure-Endgruppen,
worin das End-abgeschnittene Carbonsäure-Oligomer durch Schmelzreaktion der Folgenden hergestellt wird:
der Dicarbonsäure,
der Dihydroxyverbindung,
des weichen Blocks, der von einer End-abgeschnittenen weichen Hydroxy-Blockverbindung abgeleitet ist,
eines Diarylcarbonats und
eines Katalysators,
worin das Molverhältnis von End-abgeschnittener weicher Hydroxy-Blockverbindung zu Dihydroxyverbindung 1:4 4 bis 1:40 beträgt, das Molverhältnis von Dicarbonsäure zu den kombinierten Molmengen von Dihydroxyverbindung und End-abgeschnittener weicher Hydroxy-Blockverbindung 1,01:1 bis 2:1 beträgt und das Molverhältnis von Diarylcarbonat zu den kombinierten Molmengen von Dihydroxyverbindung und End-abgeschnittener weicher Hydroxy-Blockverbindung 1,5:1 bis 3:1 beträgt, und
worin mindestens ein Ende des weichen Blocks mit Polyarylatestereinheiten verbunden ist und mehr als oder gleich 60 Molprozent der Gesamtzahl von Endgruppen im End-abgeschnittenen Carbonsäure-Oligomer Carbonsäure-Endgruppen sind.

10. Das End-abgeschnittene Carbonsäure-Oligomer gemäß Anspruch 9, worin jedes Ende des weichen Blocks mit einer Polyarylatestereinheit verknüpft ist.

11. Das End-abgeschnittene Carbonsäure-Oligomer gemäß Anspruch 10, worin jede Arylatestereinheit eine Isophthalat-Terephthalat-Resorcinolestereinheit ist und worin der weiche Block ein Polyether, ein Polyimid, ein Polyolefin, ein Polyetherimid, ein Polyolefin-Polyalkylen-Ether, ein Polysiloxan oder eine Kombination ist, die mindestens einen der oben genannten weichen Blöcke umfasst.

12. Das End-abgeschnittene Carbonsäure-Oligomer gemäß Anspruch 9, das ein Gewichtsmittel-Molekulargewicht (Mw) von 1.000 bis 40.000 hat, gemessen mit Gelpermeationschromatographie unter Verwendung einer quervernetzten Styrol-Divinylbenzol-Säule, und kalibriert unter Anwendung von Polystyrol-Standards, worin das End-abgeschnittene Carbonsäure-Oligomer eine Glasübergangstemperatur von 20 bis 80°C hat und die Anzahl freier Carbonsäure-Endgruppen, ermittelt durch Titration unter Verwendung einer Base, größer als oder gleich 200 Milliäquivalente(n) von titrierbarer freier Carbonsäure pro Kilogramm Oligomer (meq/kg) ist.

13. Das End-abgeschnittene Carbonsäure-Oligomer gemäß Anspruch 9, worin das End-abgeschnittene Carbonsäure-Oligomer frei von Aminverbindungen ist.

14. Das End-abgeschnittene Carbonsäure-Oligomer gemäß Anspruch 9, das folgende Formel hat: 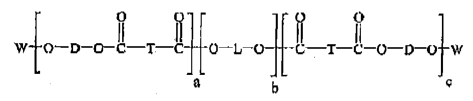 worin jedes T unabhängig eine Arylengruppe ist, jedes D unabhängig eine Arylengruppe ist, L ein weicher Block ist, jedes W unabhängig H oder ein Dicarbonsäurerest ist, der eine freie Carbonsäure hat, a und c jeweils unabhängig 0 bis 20 sind, unter der Voraussetzung, dass die Summe von a+c 4 bis 40 beträgt, und b 1 bis 3 ist, und
worin mehr als oder gleich 60 Molprozent der Gesamtzahl von Endgruppen in dem End-abgeschnittenen Carbonsäure-Oligomer Carbonsäure-Endgruppen sind und worin das End-abgeschnittene Carbonsäure-Oligomer frei von Aminverbindungen ist;

## Revendications

1. Procédé de préparation d'un oligomère d'acide carboxylique à extrémité coiffée, comprenant la mise en réaction, à l'état fondu :
d'un acide dicarboxylique,
d'un composé dihydroxy,
d'un composé hydroxy à blocs dédiés à extrémité coiffée,
d'un carbonate de diaryle, et
d'un catalyseur,
dans lequel le rapport molaire entre le composé hydroxy à blocs dédiés à extrémité coiffée et le composé dihydroxy est dans la fourchette comprise entre 1:4 et 1:40, lequel le rapport molaire entre l'acide dicarboxylique et les quantités molaires combinées du composé dihydroxy et du composé hydroxy à blocs dédiés à extrémité coiffée est dans la fourchette comprise entre 1,01:1 et 2:1, et le rapport molaire entre le carbonate de diaryle et les quantités molaires combinées du composé dihydroxy et du composé hydroxy à blocs dédiés à extrémité coiffée est dans la fourchette comprise entre 1,5:1 et 3:1.

2. Procédé selon la revendication 1, dans lequel l'acide aryl-dicarboxylique est l'acide isophtalique, l'acide téréphtalique, ou une combinaison comprenant au moins l'un des acides aryl-dicarboxyliques précédents, et dans lequel le composé dihydroxy est un résorcinol.

3. Procédé selon la revendication 1, dans lequel le composé hydroxy à blocs dédiés à extrémité coiffée est un dihydroxy poly(alkylène oxyde), un polyimide, une polyoléfine à groupes d'extrémités fonctionnalisés, un polysiloxane, ou une combinaison comprenant au moins l'un des précédents.

4. Procédé selon la revendication 3, dans lequel le poly(alkylène oxyde) présente la structure H-(-O-C₁₋₂₀)_{w}-OH, dans lequel w vaut de 1 à 500.

5. Procédé selon la revendication 1, dans lequel le carbonate de diaryle est le diphényl carbonate, bis(4-méthylphényl) carbonate, bis(4-chlorophényl) carbonate, bis(4-acétylphényl) carbonate, bis(4-méthoxyphényl) carbonate, bis(méthylsalicyl) carbonate, ou une combinaison comprenant un ou plusieurs de ces carbonates de diaryl.

6. Procédé selon la revendication 1, dans lequel le catalyseur est présent en une quantité de 1 à 1000 ppm, basée sur le poids total de la composition de réaction, et dans lequel le catalyseur est un catalyseur à base de titane, un catalyseur à base de titane comprenant un co-catalyseur, ou une base faite d'hydroxyde métallique.

7. Procédé selon la revendication 1, dans lequel la réaction à l'état fondu est conduite à une température dans la fourchette de 200 à 350°C.

8. Procédé selon la revendication 1, dans lequel une pression réduite est appliquée durant la réaction à l'état fondu, après la réaction à l'état fondu, ou à la fois durant et après la réaction à l'état fondu, dans lequel la pression réduite est inférieure ou égale à 150 millibars (mbar), et dans lequel une pression réduite est maintenue pendant une durée de 5 à 60 minutes.

9. Oligomère d'acide carboxylique à extrémité coiffée, comprenant :
des unités polyarylate ester dérivées d'un acide dicarboxylique ayant un groupe arylène en C₆ à C₃₀ et un composé dihydroxy ayant un groupe arylène en C₆ à C₃₀ ou un groupe alkylène-aryléne en C₆ à C₃₀ ;
un bloc dédié dérivé d'un composé hydroxy à blocs dédiés à extrémité coiffée, et
des groupes d'extrémité d'acide carboxylique ;
dans lequel l'oligomere à extrémité coiffée d'acide carboxylique est préparé par mise en réaction à l'état fondu :
de l'acide dicarboxylique,
du composé dihydroxy,
du bloc dédié dérivé d'un composé hydroxy à blocs dédiés à extrémité coiffée,
d'un carbonate de diaryle, et
d'un catalyseur,
dans lequel le rapport molaire entre le composé hydroxy à blocs dédiés à extrémité coiffée et le composé dihydroxy est dans la fourchette comprise entre 1:4 et 1:40, lequel le rapport molaire entre l'acide dicarboxylique et les quantités molaires combinées du composé dihydroxy et du composé hydroxy à blocs dédiés à extrémité coiffée est dans la fourchette comprise entre 1,01:1 1 et 2:1, et le rapport molaire entre le carbonate de diaryle et les quantités molaires combinées du composé dihydroxy et du composé hydroxy à blocs dédiés à extrémité coiffée est dans la fourchette comprise entre 1,5:1 et 3:1, et dans lequel au moins une extrémité du bloc dédié est lié à des unités de polyarylate ester et une quantité supérieure ou égale à 60 pourcents molaire du nombre total des groupes d'extrémité dans l'oligomère à extrémité coiffée d'acide carboxylique sont des groupes d'extrémité d'acide carboxylique.

10. Oligomère d'acide carboxylique à extrémité coiffée selon la revendication 9, dans lequel chaque extrémité du bloc dédié est liée à une unité polyarylate ester.

11. Oligomère d'acide carboxylique à extrémité coiffée selon la revendication 10, dans lequel chaque unité arylate ester est une unité d'isophalate-téréphtalate-résorcinol ester, et dans lequel le bloc dédié est un polyéther, un polyimide, une polyoléfine, un polyétherimide, un polyoléfine-polyalkylène éther, un polysiloxane, ou une combinaison comprenant au moins l'un des blocs dédiés précédents.

12. Oligomère d'acide carboxylique à extrémité coiffée selon la revendication 9, présentant un poids moléculaire à moyenne pondérée (Mw) dans la fourchette comprise entre 1.000 et 40.000, tel que mesuré en utilisant une chromatographie par perméation de gel, en utilisant une colonne styrène-divinylbenzène croisée, et telle qu'étalonnée en utilisant des polystyrènes standard, dans lequel l'oligomère d'acide carboxylique à extrémité coiffée présente une température de transition vitreuse dans la fourchette comprise entre 20 et 80°C, et le nombre de groupes d'extrémité d'acide carboxylique libres, tel que détermine par titrage en utilisant une base, est supérieur ou égal à 200 milliéquivalents d'acide carboxylique libre titrable par kilogramme de l'oligomère (meq/Kg).

13. Oligomère d'acide carboxylique à extrémité coiffée selon la revendication 9, dans lequel l'oligomère d'acide carboxylique à extrémité coiffée est exempt de composés amine,

14. oligomère d'acide carboxylique à extrémité coiffée selon la revendication 9, de formula : 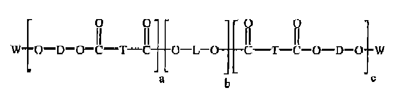 dans laquelle T est, indépendamment, un groupe arylène, chaque D est, indépendamment, un groupe arylène, T est un bloc dédié, chaque W est, indépendamment, H ou un résidu d'acide dicarboxylique ayant un acide carboxylique libre, a et c valent chacun, indépendamment, de 0 à 20, sachant que la somme de a+c vaut de 4 à 40, et b vaut de 1 à 3 ; et dans laquelle une quantité supérieure ou égale à 60 pourcents molaire du nombre total des groupes d'extrémité dans l'oligomère à extrémité coiffée d'acide carboxylique sont des groupes d'extrémité d'acide carboxylique et dans laquelle l'oligomère d'acide carboxylique à extrémité coiffée est exempt de composés amine.
